(19) Europäisches Patentamt
European Patent Office
Office européen des brevets

(11) **EP 3 293 913 B1**

(12) **EUROPEAN PATENT SPECIFICATION**

(45) Date of publication and mention
of the grant of the patent:
**26.06.2019 Bulletin 2019/26**

(21) Application number: **16782498.6**

(22) Date of filing: **09.03.2016**

(51) Int Cl.:
***H04L 12/10*** *(2006.01)*

(86) International application number:
**PCT/CN2016/076001**

(87) International publication number:
**WO 2016/169350 (27.10.2016 Gazette 2016/43)**

(54) **REVERSE POWER FEED PROCESSING METHOD AND DEVICE**

RÜCKLEISTUNGSSPEISUNGSVERARBEITUNGSVERFAHREN UND -VORRICHTUNG

PROCÉDÉ ET DISPOSITIF DE TRAITEMENT D'ALIMENTATION EN ÉNERGIE INVERSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.04.2015 CN 201510187515**

(43) Date of publication of application:
**14.03.2018 Bulletin 2018/11**

(73) Proprietor: **ZTE Corporation
Shenzhen, Guangdong 518057 (CN)**

(72) Inventors:
• **LU, Liuming
Shenzhen
Guangdong 518057 (CN)**

• **YUAN, Liquan
Shenzhen
Guangdong 518057 (CN)**

(74) Representative: **Studio Torta S.p.A.
Via Viotti, 9
10121 Torino (IT)**

(56) References cited:
**EP-A1- 2 816 758        EP-A1- 2 835 934
WO-A1-2014/106382    WO-A2-2014/177110
CN-A- 104 205 724      CN-A- 104 467 951
US-B1- 8 818 192**

**Description**

**TECHNICAL FIELD**

The present disclosure relates to the communication technical field, and more particularly to a reverse feeding processing method and device.

**BACKGROUND**

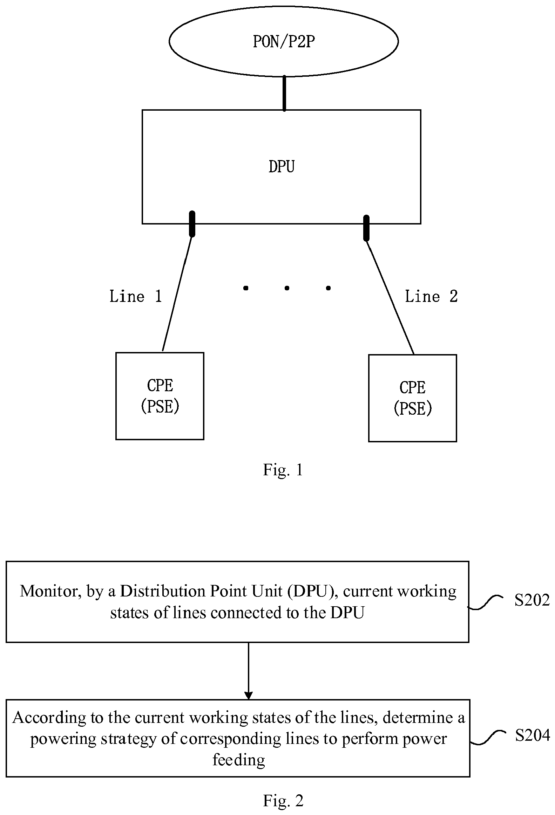

Fiber To The distribution point (FTTdp) is an important application scenario of copper access systems. Fig. 1 is a schematic diagram illustratively showing a copper access system architecture under a FTTdp scenario in related arts. As shown in Fig. 1, in an uplink direction, a Distribution Point Unit (DPU) is connected to an optical fiber access system, and in a downlink direction, the DPU is connected to a Customer Premise Equipment (CPE) via a copper access system. The optical fiber access system includes a Passive Optical Network (PON) system and a point to point (P2P) optical fiber system and the like. The copper access system includes a fast access user terminal (Fast) system, a Very High Speed Digital Subscriber Line 2 (VDSL2) system, and the like.

Due to the limited power supply environment in the FTTdp application scenario, local power supplying is very difficult. Reverse Power Feeding (RPF) is a function that the copper access system should support. A Power Sourcing Equipment (PSE) at the subscriber side is used to power the DPU. The PSE is either integrated with the CPE on one device, or can be a separate device. There may be multiple subscriber lines in the downlink direction of the DPU and power can be reversely fed to the DPU by one or more subscriber lines.

In the related arts, when reverse power feeding is performed by multiple subscriber lines, the power feeding condition of the subscriber lines are not consistent with the electrical energy required for data transmission over the lines, thereby resulting in low energy efficiency of the subscriber lines. There is no effective solution to such problem.

European patent publication EP2835934A1 provides a system for use in a reverse powered remote node and method for reverse powering a remote node.

International PCT publication WO2014/106382A1 provides a power supply method and apparatus for access device.

However, the above mentioned issues are not overcome.

**SUMMARY**

A reverse power feeding method and device are provided according to the appended claims, to at least solve the problem that when reverse power feeding is performed by multiple subscriber lines, the power feeding condition of the subscriber lines are not consistent with the electrical energy required for data transmission over the lines, thereby resulting in low energy efficiency of the subscriber lines.

According to an embodiment of the present disclosure, there is provided a reverse power feeding processing method. The method includes the following steps.

A Distribution Point Unit (DPU) monitors current working states of lines connected to the DPU.

According to the obtained current working states of the lines, a powering strategy of corresponding lines is determined to perform power feeding.

According to an embodiment of the present disclosure, the method further includes the following step.

The current working states of the lines are controlled according to states of Power Sourcing Equipment (PSE) connected to the lines. The current working state of a line refers to one of working states which the line can be in, and the working states of the line include at least one of an idle state L3, a normal operation state L0, a low power consumption state L2.1 and a standby state L2.2.

According to an embodiment of the present disclosure, the determining a powering strategy of corresponding lines to perform power feeding according to the current working states of the lines, includes:

according to the working states of the lines, determining a power consumption state of the DPU, and determining the powering strategy of corresponding lines to perform power feeding according to the power consumption state of the DPU.

The power consumption state of the DPU includes at least one of:

an idle or standby state STATE1 in which all downlink lines of the DPU are in the idle state L3 or in the standby state L2.2;

a low consumption state STATE2 in which there is no line in the normal operation state L0 among all the downlink lines of the DPU and there is at least one line in the low power consumption state L2.1 among all the downlink lines of the DPU; and

a normal operation state STATE3 in which there is at least one line in the normal operation state L0 among all the downlink lines of the DPU.

According to an embodiment of the present disclosure, the controlling the current working states of the lines according to states of PSE connected to the lines, includes:
if a rated output power of each of the PSE is $P_{rated}$:

when $P_{rated} \geq P_{L0(full)}$, determining that a line connected with the PSE is in any one of the working states, and marking the state of the PSE as $Q_{L0(full)}$;
when $P_{L2.1} \leq P_{rated} < P_{L0(full)}$, determining that a line connected with the PSE is in a state of L2.1, L2.2 or L3, and marking the state of the PSE as $Q_{L2.1}$; and
when $\max(P_{L2.2}, P_{L3}) \leq P_{rated} < P_{L2.1}$, determining that a line connected with the PSE is in a state of $L_{2.2}$ or $L_3$, and marking the state of the PSE as $Q_{low}$.

$P_{L0(full)}$ refers to an input power required by the DPU when only the downlink line, which is in the state of L0, of the DPU works and the DPU runs in full power.
$P_{L2.1}$ refers to an input power required by the DPU when only the downlink line, which is in the state of L2.1, of the DPU works.
$P_{L2.2}$ refers to an input power required by the DPU when only the downlink line, which is in the state of L2.2, of the DPU works.
$P_{L3}$ refers to an input power required by the DPU when only the downlink line, which is in the state of L3, of the DPU works.
When the PSE of a line is in the state of $Q_{low}$, the line is in the state of L2.2 or L3.
When the PSE of a line is in the state of $Q_{L2.1}$, the line is in the state of L2.1, L2.2 or L3. When the PSE of a line is in the state of $Q_{L0(full)}$, the line is in any one of the working states of L2.1, L2.2, L0 and L3.
According to an embodiment of the present disclosure, the determining the powering strategy of corresponding lines to perform power feeding according to the power consumption state of the DPU, includes:
when the power consumption state of the DPU is the idle or standby state STATE 1, obtaining information of lines, PSE of which has states of $Q_{L0(full)}$, $Q_{L2.1}$, and $Q_{low}$, among the lines, and selecting all lines in the state of L2.2 or L3 to perform balanced power feeding; and performing real-time statistics on durations when the lines are in the states of L2.2 and L3 and an input power consumption, and adjusting the durations of the lines to ensure that a power consumption $W_{consumption}$ required by the DPU is consistent with the input power consumption $W_{supply}$ when the DPU is fed.
According to an embodiment of the present disclosure, $W_{consumption}$ is defined as follows:

$$W_{consumption} \approx P_{L3} \times t_{L3} + P_{L2.2} \times t_{L2.2};$$

where $t_{L3}$ is the duration when a line is in the state of L3, and $t_{L2.2}$ is the duration when a line is in the state of L2.2.
According to an embodiment of the present disclosure, the determining the powering strategy of corresponding lines to perform power feeding according to the power consumption state of the DPU, includes:

if the power consumption state of the DPU is the low power consumption state STATE2, obtaining information of lines, PSE of which has states of $Q_{L0(full)}$, $Q_{L2.1}$, and $Q_{low}$, among the lines, and selecting lines in the state of $Q_{L0(full)}$ or $Q_{L2.1}$ to form an available power feeding group $M_{supply}$;
selecting all lines in the state of L2.1 to perform balanced power feeding, and when an input power consumption $W_{supply}$ when the DPU is fed cannot meet a power consumption $W_{consumption}$ required by the DPU, adding a line from the group $M_{supply}$; and
performing real-time statistics on durations when the lines are in the states of L2.1, L2.2 and L3 and the input power consumption, and adjusting the durations of the lines to ensure that the power consumption $W_{consumption}$ required by the DPU is consistent with the input power consumption $W_{supply}$ when the DPU is fed.

According to an embodiment of the present disclosure, $W_{consumption}$ is defined as follows:

$$W_{consumption} \approx P_{L3} \times t_{L3} + P_{L2.2} \times t_{L2.2} + P_{L2.1} \times t_{L2.1};$$

where $t_{L3}$, $t_{L2.2}$, and $t_{L2.1}$ are the durations when lines are in the states of L3, L2.2 and L2.1, respectively.
According to an embodiment of the present disclosure, the determining the powering strategy of corresponding lines to perform power feeding according to the power consumption state of the DPU, includes

when the power consumption state of the DPU is the normal operation state STATE3, obtaining information of lines, PSE of which has states of $Q_{L0(full)}$, $Q_{L2.1}$, and $Q_{low}$, among the lines, and selecting lines in the state of $Q_{L0(full)}$ to form an available power feeding group $M_{supply}$,

selecting all lines in the state of L0 to perform balanced power feeding, and when an input power consumption $W_{supply}$ when the DPU is fed cannot meet a power consumption $W_{consumption}$ required by the DPU, adding a line from the group $M_{supply}$;

performing real-time statistics on durations when the lines are in the states of L2.1, L2.2 and L3 and the input power consumption;

performing real-time statistics on durations when the lines are in $L0_{full}$, $L0_{mid}$ and $L0_{low}$ and the input power consumption; ($L0_{full}$, $L0_{mid}$ and $L0_{low}$ are three different sub-states of the state L0, $L0_{full}$ refers to that data symbols occupy a full TDD frame, $L0_{mid}$ refers to that data symbols occupy a first preset proportion of the whole number of symbols in a TDD frame, and $L0_{low}$ refers to that data symbols occupy a second preset proportion of the whole number of the symbols in a TDD frame); and

adjusting the durations when the lines are in the state of L2.1, L2.2, L3, $L0_{full}$, $L0_{mid}$ and $L0_{low}$ to ensure that the power consumption $W_{consumption}$ required by the DPU is consistent with the input power consumption $W_{supply}$ when the DPU is fed.

According to an embodiment of the present disclosure, $W_{consumption}$ is defined as follows:

$$W_{consumption} \approx P_{L3} \times t_{L3} + P_{L2.2} \times t_{L2.2} + P_{L2.1} \times t_{L2.1} + P_{L0_{full}} \times t_{L0_{full}} + P_{L0_{mid}} \times t_{L0_{mid}} + P_{L0_{low}} \times t_{L0_{low}} \; ;$$

where $t_{L3}$, $t_{L2.2}$, $t_{L2.1}$, $t_{L0full}$, $t_{L0mid}$ and $t_{L0low}$ are the durations when lines are in the states of L3, L2.2, L2.1, $L0_{full}$, $L0_{mid}$, and $L0_{low}$, respectively. $P_{L0mid}$ refers to an input power required by the DPU when there is one downlink line of the DPU works and the line is in the state of $L0_{mid}$; $P_{L0low}$ refers to an input power required by the DPU when there is one downlink line of the DPU works and the line is in the state of $L0_{low}$; $P_{L0full}$ refers to an input power required by the DPU when there is one downlink line of the DPU works and the line is in the state of $L0_{full}$.

According to an embodiment of the present disclosure, after selecting a corresponding preset powering strategy to perform power feeding according to a power consumption state of the DPU, the method further includes:

if there is a change in the power consumption state of the DPU, re-adjusting the preset powering strategy corresponding to the power consumption state of the DPU to perform power feeding.

According to an embodiment of the present disclosure, there is provided a reverse power feeding processing device. The device includes a detection module and a power feeding module.

The detection module is configured to monitor, for a Distribution Point Unit (DPU), current working states of lines connected to the DPU.

The power feeding module is configured to, according to the current working states of the lines, determine a powering strategy of corresponding lines to perform power feeding. According to an embodiment of the present disclosure, the device further includes a control module.

The control module is configured to control the current working states of the lines according to states of Power Sourcing Equipment (PSE) connected to the lines. The current working state of a line refers to one of working states which the line can be in, and the working states of the line include at least one of an idle state L3, a normal operation state L0, a low power consumption state L2.1 and a standby state L2.2.

According to an embodiment of the present disclosure, the power feeding module includes a power consumption unit.

The power consumption unit is configured to, according to the working states of the lines, determine a power consumption state of the DPU, and determine the powering strategy of corresponding lines to perform power feeding according to the power consumption state of the DPU.

The power consumption state of the DPU includes at least one of:

an idle or standby state STATE1 in which all downlink lines of the DPU are in the idle state L3 or in the standby state L2.2;
a low consumption state STATE2 in which there is no line in the normal operation state L0 among all the downlink lines of the DPU and there is at least one line in the low power consumption state L2.1 among all the downlink lines of the DPU; and
a normal operation state STATE3 in which there is at least one line in the normal operation state L0 among all the downlink lines of the DPU.

According to an embodiment of the present disclosure, if a rated output power of each of the PSE is $P_{rated}$:

when $P_{rated} \geq P_{L0(full)}$, a line connected with the PSE is in any one of the working states, and the state of the PSE is marked as $Q_{L0(full)}$;

when $P_{L2.1} \leq P_{rated} < P_{L0(full)}$, a line connected with the PSE is in a state of L2.1, L2.2 or L3, and the state of the PSE is marked as $Q_{L2.1}$; and

when $\max(P_{L2.2}, P_{L3}) \leq P_{rated} < P_{L2.1}$, a line connected with the PSE is in a state of $L_{2.2}$ or $L_3$, and the state of the PSE is marked as $Q_{low}$.

$P_{L0(full)}$ refers to an input power required by the DPU when only the downlink line, which is in the state of L0, of the DPU works and the DPU runs in full power.

$P_{L2.1}$ refers to an input power required by the DPU when only the downlink line, which is in the state of L2.1, of the DPU works.

$P_{L2.2}$ refers to an input power required by the DPU when only the downlink line, which is in the state of L2.2, of the DPU works.

$P_{L3}$ refers to an input power required by the DPU when only the downlink line, which is in the state of L3, of the DPU works.

The control module is configured to, when the PSE of a line is in the state of $Q_{low}$, determine that the line is in the state of L2.2 or L3.

The control module is configured to, when the PSE of a line is in the state of $Q_{L2.1}$, determine that the line is in the state of L2.1, L2.2 or L3.

The control module is configured to, when the PSE of a line is in the state of $Q_{L0(full)}$, determine that the line is in any one of the working states of L2.1, L2.2, L0 and L3.

According to an embodiment of the present disclosure, the power feeding module includes a first power feeding unit.

The first power feeding unit is configured to, when the power consumption state of the DPU is the idle or standby state STATE1, obtain information of lines, PSE of which has states of $Q_{L0(full)}$, $Q_{L2.1}$, and $Q_{low}$, among the lines, and select all lines in the state of L2.2 or L3 to perform balanced power feeding.

The first power feeding unit is configured to perform real-time statistics on durations when the lines are in the states of L2.2 and L3 and an input power consumption, and adjust the durations of the lines to ensure that a power consumption $W_{consumption}$ required by the DPU is consistent with the input power consumption $W_{supply}$ when the DPU is fed.

According to an embodiment of the present disclosure, $W_{consumption}$ is defined as follows:

$$W_{consumption} \approx P_{L3} \times t_{L3} + P_{L2.2} \times t_{L2.2};$$

where $t_{L3}$ is the duration when a line is in the state of L3, and $t_{L2.2}$ is the duration when a line is in the state of L2.2.

According to an embodiment of the present disclosure, the power feeding module includes a second power feeding unit.

The second power feeding unit configured to, if the power consumption state of the DPU is the low power consumption state STATE2, obtain information of lines, PSE of which has states of $Q_{L0(full)}$, $Q_{L2.1}$, and $Q_{low}$, among the lines, and select lines in the state of $Q_{L0(full)}$ or $Q_{L2.1}$ to form an available power feeding group $M_{supply}$.

The second power feeding unit is configured to select all lines in the state of L2.1 to perform balanced power feeding, and when an input power consumption $W_{supply}$ when the DPU is fed cannot meet a power consumption $W_{consumption}$ required by the DPU, add a line from the group $M_{supply}$.

The second power feeding unit is configured to perform real-time statistics on durations when the lines are in the states of L2.1, L2.2 and L3 and the input power consumption, and adjust the durations of the lines to ensure that the power consumption $W_{consumption}$ required by the DPU is consistent with the input power consumption $W_{supply}$ when the DPU is fed.

According to an embodiment of the present disclosure, $W_{consumption}$ is defined as follows:

$$W_{consumption} \approx P_{L3} \times t_{L3} + P_{L2.2} \times t_{L2.2} + P_{L2.1} \times t_{L2.1};$$

where $t_{L3}$, $t_{L2.2}$, and $t_{L2.1}$ are the durations when lines are in the states of L3, L2.2 and L2.1, respectively.

According to an embodiment of the present disclosure, the power feeding module includes a third power feeding unit.

The third power feeding unit is configured to, when the power consumption state of the DPU is the normal operation state STATE3, obtain information of lines, PSE of which has states of $Q_{L0(full)}$, $Q_{L2.1}$, and $Q_{low}$, among the lines, and select lines in the state of $Q_{L0(full)}$ to form an available power feeding group $M_{supply}$.

The third power feeding unit is configured to select all lines in the state of L0 to perform balanced power feeding, and when an input power consumption $W_{supply}$ when the DPU is fed cannot meet a power consumption $W_{consumption}$ required by the DPU, add a line from the group $M_{supply}$.

The third power feeding unit is configured to perform real-time statistics on durations when the lines are in the states of L2.1, L2.2 and L3 and the input power consumption.

The third power feeding unit is configured to perform real-time statistics on durations when the lines are in $L0_{full}$, $L0_{mid}$ and $L0_{low}$ and the input power consumption. $L0_{full}$, $L0_{mid}$ and $L0_{low}$ are three different sub-states of the state L0. $L0_{full}$ refers to that data symbols occupy a full TDD frame. $L0_{mid}$ refers to that data symbols occupy a first preset proportion of the whole number of symbols in a TDD frame. $L0_{low}$ refers to that data symbols occupy a second preset proportion of the whole number of the symbols in a TDD frame.

The third power feeding unit is configured to adjust the durations when the lines are in the state of L2.1, L2.2, L3, $L0_{full}$, $L0_{mid}$ and $L0_{low}$ to ensure that the power consumption $W_{consumption}$ required by the DPU is consistent with the input power consumption $W_{supply}$ when the DPU is fed.

According to an embodiment of the present disclosure, $W_{consumption}$ is defined as follows:

$$W_{consumption} \approx P_{L3} \times t_{L3} + P_{L2.2} \times t_{L2.2} + P_{L2.1} \times t_{L2.1} + P_{L0_{full}} \times t_{L0_{full}} + P_{L0_{mid}} \times t_{L0_{mid}} + P_{L0_{low}} \times t_{L0_{low}} ;$$

where $t_{L3}$, $t_{L2.2}$, $t_{L2.1}$, $t_{L0full}$, $t_{L0mid}$ and $t_{L0low}$ are the durations when lines are in the states of L3, L2.2, L2.1, $L0_{full}$, $L0_{mid}$, and $L0_{low}$, respectively. $P_{L0mid}$ refers to an input power required by the DPU when there is one downlink line of the DPU works and the line is in the state of $L0_{mid}$. $P_{L0low}$ refers to an input power required by the DPU when there is one downlink line of the DPU works and the line is in the state of $L0_{low}$. $P_{L0full}$ refers to an input power required by the DPU when there is one downlink line of the DPU works and the line is in the state of $L0_{full}$.

According to an embodiment of the present disclosure, the device further includes an adjusting module.:
The adjusting module is configured to, if there is a change in the power consumption state of the DPU, re-adjust the preset powering strategy corresponding to the power consumption state of the DPU to perform power feeding.

In the embodiments of the present disclosure, a DPU monitors current working states of lines connected to the DPU, and according to the obtained current working states of the lines, a powering strategy of corresponding lines is determined to perform power feeding. The present disclosure can solve the problem that when reverse power feeding is performed by multiple subscriber lines, the power feeding condition of the subscriber lines are not consistent with the electrical energy required for data transmission over the lines, thereby resulting in low energy efficiency of the subscriber lines. Thus, the present disclosure can improve fairness when the subscriber lines fed power to the DPU, and consequently improve the energy efficiency of the subscriber lines.

## BRIEF DESCRIPTION OF THE DRAWINGS

The drawings described herein, which constitute a part of the present disclosure, are used to provide a further understanding of the present disclosure. The exemplary embodiments and the descriptions thereof are used to explain the present disclosure and are not intended to unduly limit the present disclosure.

Fig. 1 is a schematic diagram illustratively showing a copper access system architecture under a FTTdp scenario in related arts.
Fig. 2 is a flow chart illustratively showing a reverse power feeding processing method according to an embodiment of the present disclosure.
Fig. 3 is a block diagram illustratively showing a reverse power feeding processing device according to an embodiment of the present disclosure.
Fig. 4 is a flow chart illustratively showing a reverse fair power feeding by multiple lines according to an exemplary embodiment.
Fig. 5 is a schematic diagram showing an architecture of a reverse fair power feeding system according to an exemplary embodiment.

## DETAILED DESCRIPTION

Hereinafter, the present disclosure will be described in detail with reference to the accompanying drawings and embodiments. It should be noted that, in the case of no conflict, the embodiments in the present disclosure and the features in the embodiments may be combined with each other.

It should be noted that the terms "first", "second" and the like in the description and claims of the present disclosure as well as the above drawings are used to distinguish similar objects, and are not necessarily used to describe a specific sequence or order.

An embodiment of the present disclosure provides a reverse power feeding method. Fig. 2 is a flow chart illustratively showing a reverse power feeding method according to an exemplary embodiment of the present disclosure. As shown in Fig. 2, the method may include the following steps.

In step S202, a Distribution Point Unit (DPU) monitors current working states of lines connected to the DPU.

In step S204, according to the current working states of the lines, a powering strategy of corresponding lines is determined to perform power feeding.

By the above steps, a DPU monitors current working states of lines connected to the DPU, and according to the obtained current working states of the lines, a powering strategy of corresponding lines is determined to perform power feeding. The present disclosure can solve the problem that when reverse power feeding is performed by multiple subscriber lines, the power feeding condition of the subscriber lines are not consistent with the electrical energy required for data transmission over the lines, thereby resulting in low energy efficiency of the subscriber lines. Thus, the present disclosure can improve fairness when the subscriber lines fed power to the DPU, and consequently improve the energy efficiency of the subscriber lines.

In an embodiment, the current working states of the lines are controlled according to states of Power Sourcing Equipment (PSE) connected to the lines. The current working state of a line refers to one of working states which the line can be in, and the working states of the line include at least one of an idle state L3, a normal operation state L0, a low power consumption state L2.1 and a standby state L2.2.

In an embodiment, determining a powering strategy of corresponding lines to perform power feeding according to the current working states of the lines, includes:

according to the working states of the lines, determining a power consumption state of the DPU, and determining the powering strategy of corresponding lines to perform power feeding according to the power consumption state of the DPU.

The power consumption state of the DPU includes at least one of an idle or standby state STATE 1, a low consumption state STATE2 and a normal operation state STATE3.

In the idle or standby state STATE1, all downlink lines of the DPU are in the idle state L3 or in the standby state L2.2.

In the low consumption state STATE2, there is no line in the normal operation state L0 among all the downlink lines of the DPU and there is at least one line in the low power consumption state L2.1 among all the downlink lines of the DPU.

In the normal operation state STATE3, there is at least one line in the normal operation state L0 among all the downlink lines of the DPU.

In an embodiment, the controlling the current working states of the lines according to states of PSE connected to the lines may include the following steps.

If a rated output power of each of the PSE is $P_{rated}$:

when $P_{rated} \geq P_{L0(full)}$, a line connected with the PSE is in any one of the working states, and the state of the PSE is marked as $Q_{L0(full)}$;

when $P_{L2.1} \leq P_{rated} < P_{L0(full)}$, a line connected with the PSE is in a state of L2.1, L2.2 or L3, and the state of the PSE is marked as $Q_{L2.1}$; and

when $\max(P_{L2.2}, P_{L3}) \leq P_{rated} < P_{L2.1}$, a line connected with the PSE is in a state of $L_{2.2}$ or L3, and the state of the PSE is marked as $Q_{low}$.

$P_{L0(full)}$ refers to an input power required by the DPU when only the downlink line, which is in the state of L0, of the DPU works and the DPU runs in full power.

$P_{L2.1}$ refers to an input power required by the DPU when only the downlink line, which is in the state of L2.1, of the DPU works.

$P_{L2.2}$ refers to an input power required by the DPU when only the downlink line, which is in the state of L2.2, of the DPU works.

$P_{L3}$ refers to an input power required by the DPU when only the downlink line, which is in the state of L3, of the DPU works.

When the PSE of a line is in the state of $Q_{low}$, the line is in the state of $L_{2.2}$ or L3.

When the PSE of a line is in the state of $Q_{L2.1}$, the line is in the state of L2.1, L2.2 or L3. When the PSE of a line is in the state of $Q_{L0(full)}$, the line is in any one of the working states of L2.1, L2.2, L0 and L3.

According to an embodiment, the determining the powering strategy of corresponding lines to perform power feeding according to the power consumption state of the DPU, may include the following steps.

When the power consumption state of the DPU is the idle or standby state STATE1, information of lines, PSE of which has states of $Q_{L0(full)}$, $Q_{L2.1}$, and $Q_{low}$, among the lines are obtained, and all lines in the state of L2.2 or L3 are selected to perform balanced power feeding.

Real-time statistics is performed on durations when the lines are in the states of $L_{2.2}$ and L3 and an input power consumption, and the durations of the lines are adjusted to ensure that a power consumption $W_{consumption}$ required by the DPU is consistent with the input power consumption $W_{supply}$ when the DPU is fed.

$W_{consumption}$ may be defined as:

$$W_{consumption} \approx P_{L3} \times t_{L3} + P_{L2.2} \times t_{L2.2};$$

where $t_{L3}$ is the duration when a line is in the state of L3, and $t_{L2.2}$ is the duration when a line is in the state of L2.2.

According to an embodiment, the determining the powering strategy of corresponding lines to perform power feeding according to the power consumption state of the DPU may include the following steps.

If the power consumption state of the DPU is the low power consumption state STATE2, information of lines, PSE of which has states of $Q_{L0(full)}$, $Q_{L2.1}$, and $Q_{low}$, among the lines is obtained, and lines in the state of $Q_{L0(full)}$ or $Q_{L2.1}$ are selected to form an available power feeding group $M_{supply}$.

All lines in the state of L2.1 are selected to perform balanced power feeding, and when an input power consumption $W_{supply}$ when the DPU is fed cannot meet a power consumption $W_{consumption}$ required by the DPU, a line from the group $M_{supply}$ is added.

Peal-time statistics is performed on durations when the lines are in the states of L2.1, L2.2 and L3 and the input power consumption, and the durations of the lines are adjusted to ensure that the power consumption $W_{consumption}$ required by the DPU is consistent with the input power consumption $W_{supply}$ when the DPU is fed.

$W_{consumption}$ may be defined as:

$$W_{consumption} \approx P_{L3} \times t_{L3} + P_{L2.2} \times t_{L2.2} + P_{L2.1} \times t_{L2.1};$$

where $t_{L3}$, $t_{L2.2}$, and $t_{L2.1}$ are the durations when lines are in the states of L3, L2.2 and L2.1, respectively.

According to an embodiment, the determining the powering strategy of corresponding lines to perform power feeding according to the power consumption state of the DPU, may include the following steps.

When the power consumption state of the DPU is the normal operation state STATE3, information of lines, PSE of which has states of $Q_{L0(full)}$, $Q_{L2.1}$, and $Q_{low}$, among the lines is obtained, and lines in the state of $Q_{L0(full)}$ are selected to form an available power feeding group $M_{supply}$.

All lines in the state of L0 are selected to perform balanced power feeding, and when an input power consumption $W_{supply}$ when the DPU is fed cannot meet a power consumption $W_{consumption}$ required by the DPU, a line from the group $M_{supply}$ is added.

Real-time statistics is performed on durations when the lines are in the states of L2.1, L2.2 and L3 and the input power consumption.

Real-time statistics is performed on durations when the lines are in $L0_{full}$, $L0_{mid}$ and $L0_{low}$ and the input power consumption. $L0_{full}$, $L0_{mid}$ and $L0_{low}$ are three different sub-states of the state L0. $L0_{full}$ refers to that data symbols occupy a full TDD frame. $L0_{mid}$ refers to that data symbols occupy a first preset proportion of the whole number of symbols in a TDD frame. $L0_{low}$ refers to that data symbols occupy a second preset proportion of the whole number of the symbols in a TDD frame.

The durations when the lines are in the state of L2.1, L2.2, L3, $L0_{full}$, $L0_{mid}$ and $L0_{low}$ are adjusted to ensure that the power consumption $W_{consumption}$ required by the DPU is consistent with the input power consumption $W_{supply}$ when the DPU is fed.

$W_{consumption}$ may be defined as:

$$W_{consumption} \approx P_{L3} \times t_{L3} + P_{L2.2} \times t_{L2.2} + P_{L2.1} \times t_{L2.1} + P_{L0_{full}} \times t_{L0_{full}} + P_{L0_{mid}} \times t_{L0_{mid}} + P_{L0_{low}} \times t_{L0_{low}};$$

where $t_{L3}$, $t_{L2.2}$, $t_{L2.1}$, $t_{L0_{full}}$, $t_{L0_{mid}}$ and $t_{L0_{low}}$ are the durations when lines are in the states of L3, L2.2, L2.1, $L0_{full}$, $L0_{mid}$,

and L0$_{low}$, respectively. P$_{L0mid}$ refers to an input power required by the DPU when there is one downlink line of the DPU works and the line is in the state of L0$_{mid}$. P$_{L0low}$ refers to an input power required by the DPU when there is one downlink line of the DPU works and the line is in the state of L0$_{low}$. P$_{L0full}$ refers to an input power required by the DPU when there is one downlink line of the DPU works and the line is in the state of L0$_{full}$.

According to an embodiment, after selecting a corresponding preset powering strategy to perform power feeding according to a power consumption state of the DPU, the method further may further include:

if there is a change in the power consumption state of the DPU, re-adjusting the preset powering strategy corresponding to the power consumption state of the DPU to perform power feeding.

An embodiment of the present disclosure further provides a reverse power feeding device. The device is used to implement the above (exemplary) embodiments and detailed descriptions will not be repeated here. As used herein, the term "module" may refer to a combination of hardware and/or software for realizing a preset function. Although the devices described in the following embodiments are preferably implemented in software, the implementation of hardware, or a combination of software and hardware, is also possible and can be conceived.

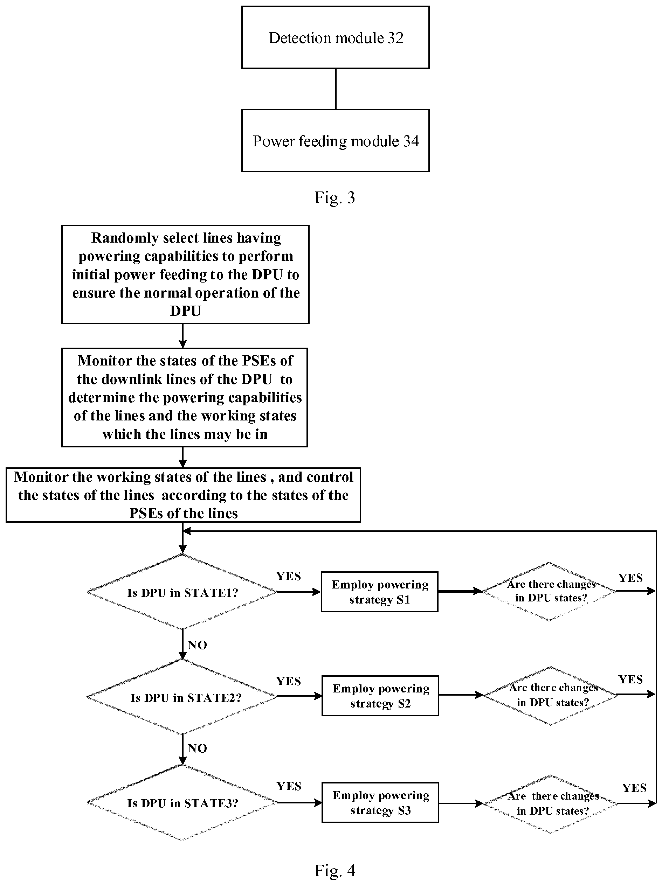

Fig. 3 is a block diagram showing a reverse power feeding device according to an embodiment of the preset disclosure. As shown in Fig. 3, the device may include a detection module 32 and a power feeding module 34.

The detection module 32 is configured to monitor, for a Distribution Point Unit (DPU), current working states of lines connected to the DPU.

The power feeding module 34 is configured to, according to the current working states of the lines, determine a powering strategy of corresponding lines to perform power feeding. According to an embodiment, the device further includes a control module.

The control module is configured to control the current working states of the lines according to states of Power Sourcing Equipment (PSE) connected to the lines. The current working state of a line refers to one of working states which the line can be in, and the working states of the line include at least one of an idle state L3, a normal operation state L0, a low power consumption state L2.1 and a standby state L2.2.

According to an embodiment, the power feeding module 34 includes a power consumption unit.

The power consumption unit is configured to, according to the working states of the lines, determine a power consumption state of the DPU, and determine the powering strategy of corresponding lines to perform power feeding according to the power consumption state of the DPU.

The power consumption state of the DPU includes at least one of:

an idle or standby state STATE 1 in which all downlink lines of the DPU are in the idle state L3 or in the standby state L2.2;
a low consumption state STATE2 in which there is no line in the normal operation state L0 among all the downlink lines of the DPU and there is at least one line in the low power consumption state L2.1 among all the downlink lines of the DPU; and
a normal operation state STATE3 in which there is at least one line in the normal operation state L0 among all the downlink lines of the DPU.

According to an embodiment, if a rated output power of each of the PSE is P$_{rated}$:

when P$_{rated} \geq$P$_{L0(full)}$, a line connected with the PSE is in any one of the working states, and the state of the PSE is marked as Q$_{L0(full)}$;
when P$_{L2.1} \leq$P$_{rated} <$P$_{L0(full)}$, a line connected with the PSE is in a state of L2.1, L2.2 or L3, and the state of the PSE is marked as Q$_{L2.1}$; and
when max(P$_{L2.2}$, P$_{L3}) \leq$P$_{rated} <$P$_{L2.1}$, a line connected with the PSE is in a state of L$_{2.2}$ or L$_3$, and the state of the PSE is marked as Q$_{low}$.

P$_{L0(full)}$ refers to an input power required by the DPU when only the downlink line, which is in the state of L0, of the DPU works and the DPU runs in full power.

P$_{L2.1}$ refers to an input power required by the DPU when only the downlink line, which is in the state of L2.1, of the DPU works.

P$_{L2.2}$ refers to an input power required by the DPU when only the downlink line, which is in the state of L2.2, of the DPU works.

P$_{L3}$ refers to an input power required by the DPU when only the downlink line, which is in the state of L3, of the DPU works.

The control module is configured to, when the PSE of a line is in the state of Q$_{low}$, determine that the line is in the state of L2.2 or L3.

The control module is configured to, when the PSE of a line is in the state of Q$_{L2.1}$, determine that the line is in the state of L2.1, L2.2 or L3.

The control module is configured to, when the PSE of a line is in the state of $Q_{L0(full)}$, determine that the line is in any one of the working states of L2.1, L2.2, L0 and L3.

According to an embodiment, the power feeding module 34 includes a first power feeding unit.

The first power feeding unit configured to, when the power consumption state of the DPU is the idle or standby state STATE1, obtain information of lines, PSE of which has states of $Q_{L0(full)}$, $Q_{L2.1}$, and $Q_{low}$, among the lines, and select all lines in the state of L2.2 or L3 to perform balanced power feeding.

The first power feeding unit is configured to perform real-time statistics on durations when the lines are in the states of L2.2 and L3 and an input power consumption, and adjust the durations of the lines to ensure that a power consumption $W_{consumption}$ required by the DPU is consistent with the input power consumption $W_{supply}$ when the DPU is fed.

According to an embodiment, the $W_{consumption}$ includes:

$$W_{consumption} \approx P_{L3} \times t_{L3} + P_{L2.2} \times t_{L2.2};$$

where $t_{L3}$ is the duration when a line is in the state of L3, and $t_{L2.2}$ is the duration when a line is in the state of L2.2.

According to an embodiment, the power feeding module 34 includes a second power feeding unit.

The second power feeding unit is configured to, if the power consumption state of the DPU is the low power consumption state STATE2, obtain information of lines, PSE of which has states of $Q_{L0(full)}$, $Q_{L2.1}$, and $Q_{low}$, among the lines, and select lines in the state of $Q_{L0(full)}$ or $Q_{L2.1}$ to form an available power feeding group $M_{supply}$.

The second power feeding unit is configured to select all lines in the state of L2.1 to perform balanced power feeding, and when an input power consumption $W_{supply}$ when the DPU is fed cannot meet a power consumption $W_{consumption}$ required by the DPU, add a line from the group $M_{supply}$.

The second power feeding unit is configured to perform real-time statistics on durations when the lines are in the states of L2.1, L2.2 and L3 and the input power consumption, and adjust the durations of the lines to ensure that the power consumption $W_{consumption}$ required by the DPU is consistent with the input power consumption $W_{supply}$ when the DPU is fed.

The $W_{consumption}$ includes:

$$W_{consumption} \approx P_{L3} \times t_{L3} + P_{L2.2} \times t_{L2.2} + P_{L2.1} \times t_{L2.1};$$

where $t_{L3}$, $t_{L2.2}$, and $t_{L2.1}$ are the durations when lines are in the states of L3, L2.2 and L2.1, respectively.

According to an embodiment, the power feeding module 34 includes a third power feeding unit.

The third power feeding unit is configured to, when the power consumption state of the DPU is the normal operation state STATE3, obtain information of lines, PSE of which has states of $Q_{L0(full)}$, $Q_{L2.1}$, and $Q_{low}$, among the lines, and select lines in the state of $Q_{L0(full)}$ to form an available power feeding group $M_{supply}$.

The third power feeding unit is configured to select all lines in the state of L0 to perform balanced power feeding, and when an input power consumption $W_{supply}$ when the DPU is fed cannot meet a power consumption $W_{consumption}$ required by the DPU, add a line from the group $M_{supply}$.

The third power feeding unit is configured to perform real-time statistics on durations when the lines are in the states of L2.1, L2.2 and L3 and the input power consumption.

The third power feeding unit is configured to perform real-time statistics on durations when the lines are in $L0_{full}$, $L0_{mid}$ and $L0_{low}$ and the input power consumption. $L0_{full}$, $L0_{mid}$ and $L0_{low}$ are three different sub-states of the state L0. $L0_{full}$ refers to that data symbols occupy a full TDD frame. $L0_{mid}$ refers to that data symbols occupy a first preset proportion of the whole number of symbols in a TDD frame. $L0_{low}$ refers to that data symbols occupy a second preset proportion of the whole number of the symbols in a TDD frame.

The third power feeding unit is configured to adjust the durations when the lines are in the state of L2.1, L2.2, L3, $L0_{full}$, $L0_{mid}$ and $L0_{low}$ to ensure that the power consumption $W_{consumption}$ required by the DPU is consistent with the input power consumption $W_{supply}$ when the DPU is fed.

The $W_{consumption}$ includes:

$$W_{consumption} \approx P_{L3} \times t_{L3} + P_{L2.2} \times t_{L2.2} + P_{L2.1} \times t_{L2.1} + P_{L0_{full}} \times t_{L0_{full}} + P_{L0_{mid}} \times t_{L0_{mid}} + P_{L0_{low}} \times t_{L0_{low}};$$

where $t_{L3}$, $t_{L2.2}$, $t_{L2.1}$, $t_{L0_{full}}$, $t_{L0_{mid}}$ and $t_{L0_{low}}$ are the durations when lines are in the states of L3, L2.2, L2.1, $L0_{full}$, $L0_{mid}$,

and $L0_{low}$, respectively. $P_{L0mid}$ refers to an input power required by the DPU when there is one downlink line of the DPU works and the line is in the state of $L0_{mid}$. $P_{L0low}$ refers to an input power required by the DPU when there is one downlink line of the DPU works and the line is in the state of $L0_{low}$. $P_{L0full}$ refers to an input power required by the DPU when there is one downlink line of the DPU works and the line is in the state of $L0_{full}$.

According to an embodiment, the device further includes an adjusting module.

The adjusting module is configured to, if there is a change in the power consumption state of the DPU, re-adjust the preset powering strategy corresponding to the power consumption state of the DPU to perform power feeding.

The present disclosure will be described below with reference to exemplary embodiments and implementations.

In an exemplary embodiment, due to the limitation of the copper access system in local power feeding to a DPU under a FTTdp scenario, a RPF scheme is needed to power DPU. In the downlink direction, the DPU may be connected with a plurality of subscriber lines, and usually, multiple subscriber lines are needed to provide reverse power feeding. Different subscriber lines may be in different working states and thus there exists a problem of how to realize fairness in power feeding by multiple subscriber lines.

From the view of point of fairness of RPF, according to the FAST (ITU G.9701) standard, the working states of subscriber lines are divided into L3 (an idle state), L0 (a normal operation state), L2.1 (a low power consumption state), L2.2 (a standby state) and so on. If lines are in these states, a FAST transceiver unit located at the office end (FTU-O) and a FAST transceiver unit located at the customer end (FTU-R) consume different energy, and thus the electrical energy required by each line during reverse power feeding is different. Because there may be a plurality of subscriber lines in the downlink direction of the DPU, power feeding states of the downlink lines and corresponding power feeding requirements should be fully considered, and different powering strategies may be employed based on different state combinations of the downlink lines of the DPU. At the same time, when RPF is conducted, states of the downlink lines of the DPU and the states of the PSEs of the CPEs may be monitored and corresponding power strategies may be employed based on the current states of the subscriber lines.

According to an exemplary embodiment, in order to improve practicability of fair power feeding and reduce system complexity, the power consumption states of the DPU may be divided into the following three states.

In an idle or standby state (STATE1), all downlink subscriber lines of the DPU are in the state of L3 (the idle state) or the state of $L_{2.2}$ (the standby state).

In a low consumption state (STATE2), there is no line in the state of L0 (the normal operation state) among all the downlink subscriber lines of the DPU and there is at least one line in the state of L2.1 (the low power consumption state) among all the downlink subscriber lines of the DPU.

In a normal operation state (STATE3), there is at least one line in the state of L0 (normal operation state) among all the downlink subscriber lines of the DPU.

Also, the working states of the subscriber lines are defined according to the powering capabilities of the PSEs at the CPE end of the subscriber lines. Assuming a rated output power of each of the PSE is $P_{rated}$:

when $P_{rated} \geq P_{L0(full)}$, a line connected with the PSE is in any one of the working states, and the state of the PSE is marked as $Q_{L0(full)}$;

when $P_{L2.1} \leq P_{rated} < P_{L0(full)}$, a line connected with the PSE is in a state of L2.1, L2.2 or L3, and the state of the PSE is marked as $Q_{L2.1}$; and

when $\max(P_{L2.2}, P_{L3}) \leq P_{rated} < P_{L2.1}$, a line connected with the PSE is in a state of $L_{2.2}$ or $L_3$, and the state of the PSE is marked as $Q_{low}$.

$P_{L0(full)}$ refers to an input power required by the DPU when only the downlink line, which is in the state of L0, of the DPU works and the DPU runs in full power (note: in the state of L0, because there may be a non-continuous operation mode, $P_{L0}$ may vary).

$P_{L2.1}$ refers to an input power required by the DPU when only the downlink line, which is in the state of L2.1, of the DPU works.

$P_{L2.2}$ refers to an input power required by the DPU when only the downlink line, which is in the state of L2.2, of the DPU works.

$P_{L3}$ refers to an input power required by the DPU when only the downlink line, which is in the state of L3, of the DPU works.

Fig. 4 is a flow chart illustratively showing a reverse fair power feeding by multiple lines according to an exemplary embodiment. As shown in Fig. 4, the method may include the following steps.

In a first step, lines having powering capabilities are randomly selected to perform initial power feeding to the DPU to ensure the normal operation of the DPU.

In a second step, the states of the PSEs of the downlink lines of the DPU are monitored to determine the powering capabilities of the lines and the working states which the lines may be in. If the PSE of a line is in the state of $Q_{low}$, the line can be in the state of L2.2 or L3. If the PSE of a line is in the state of $Q_{L2.1}$, the line can be in the state of L2.1, L2.2 or L3. If the PSE of the line is in the state of $Q_{L0(full)}$, the line can be in any one of the working states of L2.1, L2.2, L0 and L3.

In a third step, the working states of the lines are monitored, and the states of the lines are controlled according to the states of the PSEs of the lines. For example, if a PSE of a line is in the state of $Q_{low}$, the state of the line is controlled to be L2.2 or L3, and the state of the line cannot be L0 or L2.1.

In a fourth step, by analyzing the working states of the line, the power consumption state of the DPU is determined, and a corresponding powering strategy is selected to perform power feeding according to the power consumption state of the DPU. If there is a change in the power consumption state of the DPU, the powering strategy may be readjusted to perform power feeding.

The powering strategies may be as follows.

Powering Strategy S1

Information of lines, PSE of which has states of $Q_{L0(full)}$, $Q_{L2.1}$, and $Q_{low}$, among all the lines is obtained, and the states of the lines are controlled according to the working states which the lines may be in. All lines in the state of L2.2 or L3 are selected to perform balanced power feeding. If the lines in the state of L2.2 or L3 experience changes, corresponding adjustments are performed.

During the power feeding, real-time statistics is performed on the information related to the power feeding.

The information may include:

durations when the lines are in the state of $L_{2.2}$ or L3; and
input power consumption information of the lines.

A periodic sampling time is selected to properly adjust powering time of the lines which feed power, to ensure that the power consumption ($W_{consumption}$) at the DPU end caused by date transmission is generally consistent with the input power consumption ($W_{supply}$) of the lines when power feeding is performed. The $W_{consumption}$ of each line can be estimated as follows:

$$W_{consumption} \approx P_{L3} \times t_{L3} + P_{L2.2} \times t_{L2.2};$$

where $t_{L3}$ is the duration when the line is in the state of L3, and $t_{L2.2}$ is the duration when the line is in the state of L2.2.

Powering Strategy S2

Information of lines, PSE of which has states of $Q_{L0(full)}$, $Q_{L2.1}$, and $Q_{low}$, among the lines is obtained, and the states of the lines are controlled according to the states which the lines can be in. Also, lines in the state of $Q_{L0(full)}$ or $Q_{L2.1}$ are selected to form an available power feeding group $M_{supply}$.

All lines in the state of L2.1 are selected to perform balanced power feeding (if the input power is not enough, a line from $M_{supply}$ can be added). When there are changes in the states of the lines in the state of L2.1, corresponding adjustments are performed.

During the power feeding, real-time statistics is performed on the information related to the power feeding.

The information may include:

durations when the lines are in the state of L2.2 or L3 or L2.1; and
input power consumption information of the lines.

A periodic sampling time is selected to properly adjust powering time of the lines which feed power, to ensure that the power consumption ($W_{consumption}$) at the DPU end caused by date transmission is generally consistent with the input power consumption ($W_{supply}$) of the lines when power feeding is performed. The $W_{consumption}$ of each line can be estimated as follows:

$$W_{consumption} \approx P_{L3} \times t_{L3} + P_{L2.2} \times t_{L2.2} + P_{L2.1} \times t_{L2.1};$$

where $t_{L3}$, $t_{L2.2}$, and $t_{L2.1}$ are the durations when lines are in the states of L3, L2.2 and L2.1, respectively.

Powering Strategy S3

Information of lines, PSE of which has states of $Q_{L0(full)}$, $Q_{L2.1}$, and $Q_{low}$, among the lines is obtained, and the states of the lines are controlled according to the states which the lines can be in.Also, lines in the state of $Q_{L0(full)}$ are selected to form an available power feeding group $M_{supply}$.

All lines in the state of L0 are selected to perform balanced power feeding (if the input power is not enough, a line from $M_{supply}$ can be added). When there are changes in the states of the lines in the state of L0, corresponding adjustments are performed.

During the power feeding, real-time statistics is performed on the information related to the power feeding.

The information may include:

durations when the lines are in the state of $L_{2.2}$ or L3 or L2.1 or $L0_{full}$ or $L0_{mid}$ or $L0_{low}$ $L0_{full}$, $L0_{mid}$ and $L0_{low}$ are three different sub-states of the state L0, $L0_{full}$ may refer to that data symbols occupy a full TDD frame, $L0_{mid}$ may refer to that data symbols occupy a half of the whole number of symbols in a TDD frame, and $L0_{low}$ may refer to that data symbols occupy a relatively small proportion of the whole number of the symbols in a TDD frame; input power consumption information of the lines.

A periodic sampling time is selected to properly adjust powering time of the lines which feed power, to ensure that the power consumption ($W_{consumption}$) at the DPU end caused by date transmission is generally consistent with the input power consumption ($W_{supply}$) of the lines when power feeding is performed. The $W_{consumption}$ of each line can be estimated as follows:

$$W_{consumption} \approx P_{L3} \times t_{L3} + P_{L2.2} \times t_{L2.2} + P_{L2.1} \times t_{L2.1} + P_{L0_{full}} \times t_{L0_{full}} + P_{L0_{mid}} \times t_{L0_{mid}} + P_{L0_{low}} \times t_{L0_{low}}$$

where $t_{L3}$, $t_{L2.2}$, $t_{L2.1}$, $t_{L0full}$, $t_{L0mid}$ and $t_{L0low}$ are the durations when lines are in the states of L3, L2.2, L2.1, $L0_{full}$, $L0_{mid}$, and $L0_{low}$, respectively; $P_{L0mid}$ refers to an input power required by the DPU when there is one downlink line of the DPU works and the line is in the state of $L0_{mid}$; $P_{L0low}$ refers to an input power required by the DPU when there is one downlink line of the DPU works and the line is in the state of $L0_{low}$; $P_{L0full}$ refers to an input power required by the DPU when there is one downlink line of the DPU works and the line is in the state of $L0_{full}$.

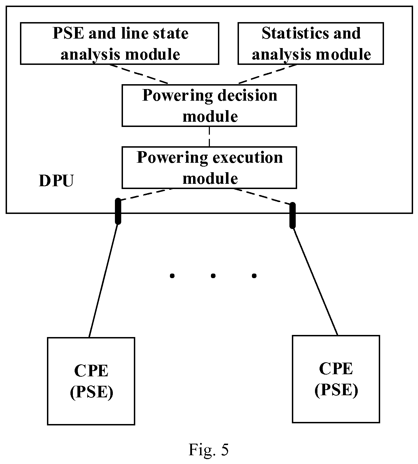

Fig. 5 is a schematic diagram showing an architecture of a reverse fair power feeding system according to an exemplary embodiment. As shown in Fig. 5, by the joint processes of the PSE and line state analysis module, the statistics and analysis module, the powering decision module, and the powering execution module, the fairness of reverse power feeding in a system based on states of multiple subscriber lines is realized. The system can be operated as follows.

First, the PSE and line state analysis module monitors the states of the PSEs of the downlink lines of the DPU, and determines the powering capabilities of the lines and the working states which the lines can be in.

Second, according to the powering decision method provided by the present disclosure, the powering decision module determines which lines to feed power and the input power of the lines; at the same time, the statistics and analysis module perform statistics on the input power of the lines and the durations when the lines perform power feeding.

Then, the powering execution module select corresponding subscriber lines to feed power according to instructions sent from the powering decision module.

According to the states of the PSEs of the downlink lines of the DPU and the working states of the lines, the system can adjust the lines for feeding power and the input power of the lines in real time.

The exemplary embodiments of the present disclosure provide a method and device for realizing fairness of reverse power feeding in a copper access system based on states of multiple lines. Under the existing powering environment of the system, while energy is conserved, the operation of the DPU can be guaranteed as normal as possible, and the services of subscribers are not influenced. Furthermore, based on the states of the subscriber lines, the input power of the lines when power feeding is performed can be flexibly assigned, to ensure relative fairness and reasonability of the power feeding. In this way, the powering conditions of subscriber lines can be generally consistent with the electrical energy consumption of the lines caused by data transmission services.

In the exemplary embodiments, when RPF is conducted, the states of the PSEs of the downlink lines of the DPU are monitored and analyzed, and the working states which the lines can be in are controlled according to the states of the PSEs of the lines. Also, according to the current working states of the lines, corresponding powering strategies may be employed to feed power.

In the exemplary embodiments, in a FTTdp application scenario of the copper access system, due to the limited powering environment, local power feeding is very difficult and thus RPF is a function which the copper access system should support. For FTTdp subscribers, how to realize fairness in the power feeding is their concern. The present disclosure can effectively solve the fairness issue in the reverse power feeding based on multiple subscriber lines. By realizing relative fairness of power feeding, the power feeding conditions of the subscriber lines can be generally consistent with the electrical energy consumption required by data transmission services of the lines. Also, by enabling strong credibility of the fairness of power feeding, the data services under the FTTdp scenario can be developed smoothly. The data transmission services can be guaranteed while the energy efficiency of subscriber lines can be improved, thereby effectively promoting application of FAST and FTTdp technologies.

Through the above description of the embodiments, those skilled in the art can clearly understand that the methods according to the above embodiments may be implemented by software plus a necessary general hardware platform, or may be implemented by hardware. However, in many cases, the former is better. Based on this understanding, the essence of the present disclosure (or in other words, the portion of the present disclosure which contributes over prior arts) can be embodied in a form of software product. The computer software product is stored in a storage medium (such as a ROM/RAM, a magnetic disk, an optical disc and so on), and instructions are included in the software product to enable a terminal device (which may be a mobile phone, a computer, a server, or a network device, and so on) to execute the methods according to the embodiments of the disclosure.

Embodiments of the present disclosure also provide a storage medium. According to an exemplary embodiment, the storage medium may be configured to store program codes for implementing the above methods. The storage medium may include various types of media capable of storing program codes, including but not limited to, a USB flash disk, a read-only memory (ROM), a RAM (Random Access Memory), a removable hard disk, a magnetic disk, or an optical disk.

According to an exemplary embodiment, a processor executes the methods in the foregoing embodiments according to the program codes already stored in the storage medium.

Obviously, those skilled in the art should understand that each module or each step of the present disclosure described above can be implemented by general purpose computing devices, which can be centralized on a single computing device or distributed over a network formed by multiple computing devices. Alternatively, the modules or steps in the present disclosure be implemented with program codes executable by a computing device, and the program codes may be stored in a storage device for execution by a computing device. In some cases, the steps shown or described herein may be executed in an order different from that described herein. The steps or modules described herein can be made into individual integrated circuit modules, or a plurality of modules or steps can be made into a single integrated circuit module. As such, the present disclosure is not limited to any specific combination of hardware and software.

The foregoing descriptions are merely exemplary embodiments of the present disclosure and are not intended to limit the present disclosure. For those skilled in the art, many changes and modifications can be made to the present disclosure. The scope of protection is defined by the wording of the claims.

## Claims

1. A reverse power feeding processing method, comprising:

   monitoring (S202), by a Distribution Point Unit, DPU, current working states of lines connected to the DPU; and according to the current working states of the lines, determining (S204) a powering strategy of corresponding lines to perform power feeding; **characterized in that**
   the method further comprises:
   controlling the current working states of the lines according to states of Power Sourcing Equipment, PSE, connected to the lines, wherein the current working state of a line refers to one of working states which the line can be in, and the working states of the line comprise at least one of an idle state L3, a normal operation state L0, a low power consumption state L2.1 and a standby state L2.2.

2. The method according to claim 1, wherein the determining (S204) a powering strategy of corresponding lines to perform power feeding according to the current working states of the lines, comprises:

   according to the working states of the lines, determining a power consumption state of the DPU, and determining the powering strategy of corresponding lines to perform power feeding according to the power consumption state of the DPU;
   wherein the power consumption state of the DPU comprises at least one of:

   an idle or standby state STATE 1 in which all downlink lines of the DPU are in the idle state L3 or in the standby state L2.2;
   a low consumption state STATE2 in which there is no line in the normal operation state L0 among all the downlink lines of the DPU and there is at least one line in the low power consumption state L2.1 among all

14

the downlink lines of the DPU; and
a normal operation state STATE3 in which there is at least one line in the normal operation state L0 among all the downlink lines of the DPU.

**3.** The method according to claim 1, wherein the controlling the current working states of the lines according to states of PSE connected to the lines, comprises:

if a rated output power of each of the PSE is $P_{rated}$:

when $P_{rated} \geq P_{L0(full)}$, determining that a line connected with the PSE is in any one of the working states, and marking the state of the PSE as $Q_{L0(full)}$;
when $P_{L2.1} \leq P_{rated} < P_{L0(full)}$, determining that a line connected with the PSE is in a state of L2.1, L2.2 or L3, and marking the state of the PSE as $Q_{L2.1}$; and
when $\max(P_{L2.2}, P_{L3}) \leq P_{rated} < P_{L2.1}$, determining that a line connected with the PSE is in a state of $L_{2.2}$ or $L_3$, and marking the state of the PSE as $Q_{low}$;

wherein:

$P_{L0(full)}$ refers to an input power required by the DPU when only the downlink line, which is in the state of L0, of the DPU works and the DPU runs in full power;
$P_{L2.1}$ refers to an input power required by the DPU when only the downlink line, which is in the state of L2.1, of the DPU works;
$P_{L2.2}$ refers to an input power required by the DPU when only the downlink line, which is in the state of L2.2, of the DPU works;
$P_{L3}$ refers to an input power required by the DPU when only the downlink line, which is in the state of L3, of the DPU works;
when the PSE of a line is in the state of $Q_{low}$, the line is in the state of L2.2 or L3;
when the PSE of a line is in the state of $Q_{L2.1}$, the line is in the state of L2.1, L2.2 or L3;
when the PSE of a line is in the state of $Q_{L0(full)}$, the line is in any one of the working states of L2.1, L2.2, L0 and L3.

**4.** The method according to claim 2, wherein the determining the powering strategy of corresponding lines to perform power feeding according to the power consumption state of the DPU, comprises:

when the power consumption state of the DPU is the idle or standby state STATE 1, obtaining information of lines, PSE of which has states of $Q_{L0(full)}$, $Q_{L2.1}$, and $Q_{low}$, among the lines, and selecting all lines in the state of L2.2 or L3 to perform balanced power feeding; and
performing real-time statistics on durations when the lines are in the states of L2.2 and L3 and an input power consumption, and adjusting the durations of the lines to ensure that a power consumption $W_{consumption}$ required by the DPU is consistent with the input power consumption $W_{supply}$ when the DPU is fed.

**5.** The method according to claim 4, wherein the $W_{consumption}$ comprises:

$$W_{consumption} \approx P_{L3} \times t_{L3} + P_{L2.2} \times t_{L2.2};$$

where $t_{L3}$ is the duration when a line is in the state of L3, and $t_{L2.2}$ is the duration when a line is in the state of L2.2.

**6.** The method according to claim 2, wherein the determining the powering strategy of corresponding lines to perform power feeding according to the power consumption state of the DPU, comprises:

if the power consumption state of the DPU is the low power consumption state STATE2, obtaining information of lines, PSE of which has states of $Q_{L0(full)}$, $Q_{L2.1}$, and $Q_{low}$, among the lines, and selecting lines in the state of $Q_{L0(full)}$ or $Q_{L2.1}$ to form an available power feeding group $M_{supply}$;
selecting all lines in the state of L2.1 to perform balanced power feeding, and when an input power consumption $W_{supply}$ when the DPU is fed cannot meet a power consumption $W_{consumption}$ required by the DPU, adding a line from the group $M_{supply}$; and

performing real-time statistics on durations when the lines are in the states of L2.1, L2.2 and L3 and the input power consumption, and adjusting the durations of the lines to ensure that the power consumption $W_{consumption}$ required by the DPU is consistent with the input power consumption $W_{supply}$ when the DPU is fed.

7. The method according to claim 6, wherein the $W_{consumption}$ comprises:

$$W_{consumption} \approx P_{L3} \times t_{L3} + P_{L2.2} \times t_{L2.2} + P_{L2.1} \times t_{L2.1};$$

wherein $t_{L3}$, $t_{L2.2}$, and $t_{L2.1}$ are the durations when lines are in the states of L3, L2.2 and L2.1, respectively.

8. The method according to claim 2, wherein the determining the powering strategy of corresponding lines to perform power feeding according to the power consumption state of the DPU, comprises:

when the power consumption state of the DPU is the normal operation state STATE3, obtaining information of lines, PSE of which has states of $Q_{L0(full)}$, $Q_{L2.1}$, and $Q_{low}$, among the lines, and selecting lines in the state of $Q_{L0(full)}$ to form an available power feeding group $M_{supply}$;

selecting all lines in the state of L0 to perform balanced power feeding, and when an input power consumption $W_{supply}$ when the DPU is fed cannot meet a power consumption $W_{consumption}$ required by the DPU, adding a line from the group $M_{supply}$;

performing real-time statistics on durations when the lines are in the states of L2.1, L2.2 and L3 and the input power consumption;

performing real-time statistics on durations when the lines are in $L0_{full}$, $L0_{mid}$ and $L0_{low}$ and the input power consumption, wherein $L0_{full}$, $L0_{mid}$ and $L0_{low}$ are three different sub-states of the state L0, $L0_{full}$ refers to that data symbols occupy a full TDD frame, $L0_{mid}$ refers to that data symbols occupy a first preset proportion of the whole number of symbols in a TDD frame, and $L0_{low}$ refers to that data symbols occupy a second preset proportion of the whole number of the symbols in a TDD frame; and

adjusting the durations when the lines are in the state of L2.1, L2.2, L3, $L0_{full}$, $L0_{mid}$ and $L0_{low}$ to ensure that the power consumption $W_{consumption}$ required by the DPU is consistent with the input power consumption $W_{supply}$ when the DPU is fed.

9. The method according to claim 8, wherein the $W_{consumption}$ comprises:

$$W_{consumption} \approx P_{L3} \times t_{L3} + P_{L2.2} \times t_{L2.2} + P_{L2.1} \times t_{L2.1} + P_{L0_{full}} \times t_{L0_{full}} + P_{L0_{mid}} \times t_{L0_{mid}} + P_{L0_{low}} \times t_{L0_{low}};$$

wherein $t_{L3}$, $t_{L2.2}$, $t_{L2.1}$, $t_{L0_{full}}$, $t_{L0_{mid}}$ and $t_{L0_{low}}$ are the durations when lines are in the states of L3, L2.2, L2.1, $L0_{full}$, $L0_{mid}$, and $L0_{low}$, respectively; $P_{L0_{mid}}$ refers to an input power required by the DPU when there is one downlink line of the DPU works and the line is in the state of $L0_{mid}$; $P_{L0_{low}}$ refers to an input power required by the DPU when there is one downlink line of the DPU works and the line is in the state of $L0_{low}$; $P_{L0_{full}}$ refers to an input power required by the DPU when there is one downlink line of the DPU works and the line is in the state of $L0_{full}$.

10. A reverse power feeding processing device, comprising:

a detection module (32) configured to monitor, for a Distribution Point Unit, DPU, current working states of lines connected to the DPU; and

a power feeding module (34) configured to, according to the current working states of the lines, determine a powering strategy of corresponding lines to perform power feeding; **characterized in that** the device further comprises:

a control module configured to control the current working states of the lines according to states of Power Sourcing Equipment, PSE, connected to the lines, wherein the current working state of a line refers to one of working states which the line can be in, and the working states of the line comprise at least one of an idle state L3, a normal operation state L0, a low power consumption state L2.1 and a standby state L2.2.

11. The device according to claim 10, wherein the power feeding module (34) comprises:

a power consumption unit configured to, according to the working states of the lines, determine a power consumption state of the DPU, and determine the powering strategy of corresponding lines to perform power feeding according to the power consumption state of the DPU;

wherein the power consumption state of the DPU comprises at least one of:

an idle or standby state STATE1 in which all downlink lines of the DPU are in the idle state L3 or in the standby state L2.2;

a low consumption state STATE2 in which there is no line in the normal operation state L0 among all the downlink lines of the DPU and there is at least one line in the low power consumption state L2.1 among all the downlink lines of the DPU; and

a normal operation state STATE3 in which there is at least one line in the normal operation state L0 among all the downlink lines of the DPU.

12. The device according to claim 10, wherein:

if a rated output power of each of the PSE is $P_{rated}$:

when $P_{rated} \geq P_{L0(full)}$, a line connected with the PSE is in any one of the working states, and the state of the PSE is marked as $Q_{L0(full)}$;

when $P_{L2.1} \leq P_{rated} < P_{L0(full)}$, a line connected with the PSE is in a state of L2.1, L2.2 or L3, and the state of the PSE is marked as $Q_{L2.1}$; and

when $\max(P_{L2.2}, P_{L3}) \leq P_{rated} < P_{L2.1}$, a line connected with the PSE is in a state of $L_{2.2}$ or $L_3$, and the state of the PSE is marked as $Q_{low}$;

wherein:

$P_{L0(full)}$ refers to an input power required by the DPU when only the downlink line, which is in the state of L0, of the DPU works and the DPU runs in full power;

$P_{L2.1}$ refers to an input power required by the DPU when only the downlink line, which is in the state of L2.1, of the DPU works;

$P_{L2.2}$ refers to an input power required by the DPU when only the downlink line, which is in the state of L2.2, of the DPU works;

$P_{L3}$ refers to an input power required by the DPU when only the downlink line, which is in the state of L3, of the DPU works;

wherein the control module is configured to, when the PSE of a line is in the state of $Q_{low}$, determine that the line is in the state of $L_{2.2}$ or L3;

the control module is configured to, when the PSE of a line is in the state of $Q_{L2.1}$, determine that the line is in the state of L2.1, L2.2 or L3;

the control module is configured to, when the PSE of a line is in the state of $Q_{L0(full)}$, determine that the line is in any one of the working states of L2.1, L2.2, L0 and L3.

13. The device according to claim 11, wherein the power feeding module (34) comprises:

a first power feeding unit configured to, when the power consumption state of the DPU is the idle or standby state STATE1, obtain information of lines, PSE of which has states of $Q_{L0(full)}$, $Q_{L2.1}$, and $Q_{low}$, among the lines, and select all lines in the state of $L_{2.2}$ or L3 to perform balanced power feeding; and

wherein the first power feeding unit is configured to perform real-time statistics on durations when the lines are in the states of $L_{2.2}$ and L3 and an input power consumption, and adjust the durations of the lines to ensure that a power consumption $W_{consumption}$ required by the DPU is consistent with the input power consumption $W_{supply}$ when the DPU is fed;

the $W_{consumption}$ comprises:

$$W_{consumption} \approx P_{L3} \times t_{L3} + P_{L2.2} \times t_{L2.2};$$

where $t_{L3}$ is the duration when a line is in the state of L3, and $t_{L2.2}$ is the duration when a line is in the state of L2.2.

14. The device according to claim 11, wherein the power feeding module (34) comprises:

a second power feeding unit configured to, if the power consumption state of the DPU is the low power consumption state STATE2, obtain information of lines, PSE of which has states of $Q_{L0(full)}$, $Q_{L2.1}$, and $Q_{low}$, among the lines, and select lines in the state of $Q_{L0(full)}$ or $Q_{L2.1}$ to form an available power feeding group $M_{supply}$;

wherein the second power feeding unit is configured to select all lines in the state of L2.1 to perform balanced power feeding, and when an input power consumption $W_{supply}$ when the DPU is fed cannot meet a power consumption $W_{consumption}$ required by the DPU, add a line from the group $M_{supply}$; and

wherein the second power feeding unit is configured to perform real-time statistics on durations when the lines are in the states of L2.1, L2.2 and L3 and the input power consumption, and adjust the durations of the lines to ensure that the power consumption $W_{consumption}$ required by the DPU is consistent with the input power consumption $W_{supply}$ when the DPU is fed;

the $W_{consumption}$ comprises:

$$W_{consumption} \approx P_{L3} \times t_{L3} + P_{L2.2} \times t_{L2.2} + P_{L2.1} \times t_{L2.1};$$

wherein $t_{L3}$, $t_{L2.2}$, and $t_{L2.1}$ are the durations when lines are in the states of L3, L2.2 and L2.1, respectively.

15. The device according to claim 11, wherein the power feeding module (34) comprises:

a third power feeding unit configured to, when the power consumption state of the DPU is the normal operation state STATE3, obtain information of lines, PSE of which has states of $Q_{L0(full)}$, $Q_{L2.1}$, and $Q_{low}$, among the lines, and select lines in the state of $Q_{L0(full)}$ to form an available power feeding group $M_{supply}$;

wherein the third power feeding unit is configured to select all lines in the state of L0 to perform balanced power feeding, and when an input power consumption $W_{supply}$ when the DPU is fed cannot meet a power consumption $W_{consumption}$ required by the DPU, add a line from the group $M_{supply}$;

wherein the third power feeding unit is configured to perform real-time statistics on durations when the lines are in the states of L2.1, L2.2 and L3 and the input power consumption;

wherein the third power feeding unit is configured to perform real-time statistics on durations when the lines are in $L0_{full}$, $L0_{mid}$ and $L0_{low}$ and the input power consumption, wherein $L0_{full}$, $L0_{mid}$ and $L0_{low}$ are three different sub-states of the state L0, $L0_{full}$ refers to that data symbols occupy a full TDD frame, $L0_{mid}$ refers to that data symbols occupy a first preset proportion of the whole number of symbols in a TDD frame, and $L0_{low}$ refers to that data symbols occupy a second preset proportion of the whole number of the symbols in a TDD frame; and

wherein the third power feeding unit is configured to adjust the durations when the lines are in the state of L2.1, L2.2, L3, $L0_{full}$, $L0_{mid}$ and $L0_{low}$ to ensure that the power consumption $W_{consumption}$ required by the DPU is consistent with the input power consumption $W_{supply}$ when the DPU is fed;

the $W_{consumption}$ comprises:

$$W_{consumption} \approx P_{L3} \times t_{L3} + P_{L2.2} \times t_{L2.2} + P_{L2.1} \times t_{L2.1} + P_{L0_{full}} \times t_{L0_{full}} + P_{L0_{mid}} \times t_{L0_{mid}} + P_{L0_{low}} \times t_{L0_{low}};$$

wherein $t_{L3}$, $t_{L2.2}$, $t_{L2.1}$, $t_{L0_{full}}$, $t_{L0_{mid}}$ and $t_{L0_{low}}$ are the durations when lines are in the states of L3, L2.2, L2.1, $L0_{full}$, $L0_{mid}$, and $L0_{low}$, respectively; $P_{L0_{mid}}$ refers to an input power required by the DPU when there is one downlink line of the DPU works and the line is in the state of $L0_{mid}$; $P_{L0_{low}}$ refers to an input power required by the DPU when there is one downlink line of the DPU works and the line is in the state of $L0_{low}$; $P_{L0_{full}}$ refers to an input power required by the DPU when there is one downlink line of the DPU works and the line is in the state of $L0_{full}$.

## Patentansprüche

1. Leistungsrückspeisungsverarbeitungsverfahren, umfassend:

Überwachen (S202), durch eine Verteilungspunkteinheit (Distribution Point Unit), DPU, aktueller Arbeitszustände von Leitungen, die mit der DPU verbunden sind; und
gemäß den aktuellen Arbeitszuständen der Leitungen, Bestimmen (S204) einer Leistungsversorgungsstrategie entsprechender Leitungen zum Durchführen von Leistungsspeisung, **dadurch gekennzeichnet, dass**
das Verfahren weiter umfasst:

Steuern der aktuellen Arbeitszustände der Leitungen gemäß Zuständen eines Leistungsquellengeräts (Power Sourcing Equipment), PSE, das mit den Leitungen verbunden ist, wobei sich der aktuelle Arbeitszustand einer Leitung auf einen von Arbeitszuständen bezieht, in welchen die Leitung sein kann, und die Arbeitszustände der Leitung mindestens einen von einem Leerlaufzustand L3, einem normalen Betriebszustand L0, einem Niederleistungsverbrauchszustand L2.1 und einem Bereitschaftszustand L2.2 umfassen.

2. Verfahren nach Anspruch 1, wobei das Bestimmen (S204) einer Leistungsversorgungsstrategie entsprechender Leitungen zum Durchführen von Leistungsspeisung gemäß den aktuellen Arbeitszuständen der Leitungen umfasst:

gemäß den Arbeitszuständen der Leitungen, Bestimmen eines Leistungsverbrauchszustands der DPU, und Bestimmen der Leistungsversorgungsstrategie entsprechender Leitungen zum Durchführen von Leistungsspeisung gemäß dem Leistungsverbrauchszustand der DPU;
wobei der Leistungsverbrauchszustand der DPU mindestens einen umfasst von:

einem Leerlauf- oder Bereitschaftszustand STATE1, in dem alle Downlink-Leitungen der DPU im Leerlaufzustand L3 oder im Bereitschaftszustand L2.2 sind;
einem Niederverbrauchszustand STATE2, in dem keine Leitung unter allen Downlink-Leitungen der DPU im normalen Betriebszustand L0 ist und mindestens eine Leitung von allen Downlink-Leitungen der DPU im Niederleistungsverbrauchszustand L2.1 ist; und
einem normalen Betriebszustand STATE3, in dem mindestens eine Leitung unter allen Downlink-Leitungen der DPU im normalen Betriebszustand L0 ist.

3. Verfahren nach Anspruch 1, wobei das Steuern der aktuellen Arbeitszustände der Leitungen gemäß Zuständen des PSE, das mit den Leitungen verbunden ist, umfasst:

falls eine Nennausgangsleistung jedes der PSE $P_{rated}$ ist:

wenn $P_{rated} \geq P_{L0(full)}$, Bestimmen, dass eine Leitung, die mit dem PSE verbunden ist, in einem der Arbeitszustände ist, und Markieren des Zustands des PSE als $Q_{L0(full)}$;
wenn $P_{L2.1} \leq P_{rated} < P_{L0(full)}$, Bestimmen, dass eine Leitung, die mit dem PSE verbunden ist, in einem Zustand L2.1, L2.2 oder L3 ist, und Markieren des Zustands des PSE als $Q_{L2.1}$; und
wenn $\max(P_{L2.2}; P_{L3}) \leq P_{rated} < P_{L2.1}$, Bestimmen, dass eine Leitung, die mit dem PSE verbunden ist, in einem Zustand $L_{2.2}$ oder $L_3$ ist, und Markieren des Zustands des PSE als $Q_{low}$;

wobei:

$P_{L0(full)}$ sich auf eine Eingangsleistung bezieht, die die DPU benötigt, wenn nur die Downlink-Leitung, die im Zustand L0 ist, der DPU arbeitet und die DPU bei voller Leistung läuft;
$P_{L2.1}$ sich auf eine Eingangsleistung bezieht, die die DPU benötigt, wenn nur die Downlink-Leitung, die im Zustand L2.1 ist, der DPU arbeitet;
$P_{L2.2}$ sich auf eine Eingangsleistung bezieht, die die DPU benötigt, wenn nur die Downlink-Leitung, die im Zustand L2.2 ist, der DPU arbeitet;
$P_{L3}$ sich auf eine Eingangsleistung bezieht, die die DPU benötigt, wenn nur die Downlink-Leitung, die im Zustand L3 ist, der DPU arbeitet;
wenn das PSE einer Leitung im Zustand $Q_{low}$ ist, die Leitung im Zustand L2.2 oder L3 ist;
wenn das PSE einer Leitung im Zustand $Q_{L2.1}$ ist, die Leitung im Zustand L2.1, L2.2 oder L3 ist;
wenn das PSE einer Leitung im Zustand $Q_{L0(full)}$ ist, die Leitung in einem der Arbeitszustände L2.1, L2.2, L0 und L3 ist.

4. Verfahren nach Anspruch 2, wobei das Bestimmen der Leistungsversorgungsstrategie entsprechender Leitungen zum Durchführen von Leistungsspeisung gemäß dem Leistungsverbrauchszustand der DPU umfasst:

wenn der Leistungsverbrauchszustand der DPU der Leerlauf- oder Bereitschaftszustand STATE1 ist, Erhalten von Informationen von Leitungen unter den Leitungen, deren PSE Zustände $Q_{L0(full)}$, $Q_{L2.1}$ und $Q_{low}$ hat, und Auswählen aller Leitungen im Zustand L2.2 oder L3, um eine ausgewogene Leistungsspeisung durchzuführen; und
Durchführen einer Echtzeitstatistik über Dauern, in denen die Leitungen in den Zuständen L2.2 und L3 sind, und über einen Eingangsleistungsverbrauch, und Einstellen der Dauern der Leitungen, um sicherzustellen, dass ein Leistungsverbrauch $W_{consumption}$, den die DPU benötigt, mit dem Eingangsleistungsverbrauch $W_{supply}$ übereinstimmt, wenn die DPU gespeist wird.

5. Verfahren nach Anspruch 4, wobei der $W_{consumption}$ umfasst:

$$W_{consumption} \approx P_{L3} \times t_{L3} + P_{L2.2} \times t_{L2.2};$$

worin $t_{L3}$ die Dauer ist, in der eine Leitung im Zustand L3 ist, und $t_{L2.2}$ die Dauer ist, in der eine Leitung im Zustand L2.2 ist.

6. Verfahren nach Anspruch 2, wobei das Bestimmen der Leistungsversorgungsstrategie entsprechender Leitungen zum Durchführen einer Leistungsspeisung gemäß dem Leistungsverbrauchszustand der DPU umfasst:

falls der Leistungsverbrauchszustand der DPU der Niederleistungsverbrauchszustand STATE2 ist, Erhalten von Informationen von Leitungen unter den Leitungen, deren PSE Zustände $Q_{L0(full)}$, $Q_{L2.1}$ und $Q_{low}$ hat, und Auswählen von Leitungen im Zustand $Q_{L0(full)}$ oder $Q_{L2.1}$, um eine verfügbare Leistungsspeisungsgruppe $M_{supply}$ zu bilden;

Auswählen aller Leitungen im Zustand L2.1, um eine ausgewogene Leistungsspeisung durchzuführen, und wenn ein Eingangsleistungsverbrauch $W_{supply}$, wenn die DPU gespeist wird, einen Leistungsverbrauch $W_{consumption}$ nicht erfüllen kann, den die DPU benötigt, Hinzufügen einer Leitung aus der Gruppe $M_{supply}$; und Durchführen einer Echtzeitstatistik über Dauern, in der die Leitungen in den Zuständen L2.1, L2.2 und L3 sind, und den Eingangsleistungsverbrauch, und Einstellen der Dauern der Leitungen um sicherzustellen, dass der Leistungsverbrauch $W_{consumption}$, den die DPU benötigt, mit dem Eingangsleistungsverbrauch $W_{supply}$ übereinstimmt, wenn die DPU gespeist wird.

7. Verfahren nach Anspruch 6, wobei der $W_{consumption}$ umfasst:

$$W_{consumption} \approx P_{L3} \times t_{L3} + P_{L2.2} \times t_{L2.2} + P_{L2.1} \times t_{L2.1};$$

wobei $t_{L3}$, $t_{L2.2}$ und $t_{L2.1}$ die Dauern sind, in denen Leitungen in den Zuständen L3, L2.2 bzw. L2.1 sind.

8. Verfahren nach Anspruch 2, wobei das Bestimmen der Leistungsversorgungsstrategie entsprechender Leitungen zum Durchführen von Leistungsspeisung gemäß dem Leistungsverbrauchszustand der DPU umfasst:

wenn der Leistungsverbrauchszustand der DPU der normale Betriebszustand STATE3 ist, Erhalten von Informationen von Leitungen unter den Leitungen, deren PSE Zustände $Q_{L0(full)}$, $Q_{L2.1}$ und $Q_{low}$ hat, und Auswählen von Leitungen im Zustand $Q_{L0(full)}$, um eine verfügbare Leistungsspeisungsgruppe $M_{supply}$ zu bilden;

Auswählen aller Leitungen im Zustand L0, um eine ausgewogene Leistungsspeisung durchzuführen, und wenn ein Eingangsleistungsverbrauch $W_{supply}$, wenn die DPU gespeist wird, einen Leistungsverbrauch $W_{consumption}$ nicht erfüllen kann, den die DPU benötigt, Hinzufügen einer Leitung aus der Gruppe $M_{supply}$;

Durchführen einer Echtzeitstatistik über Dauern, in denen die Leitungen in den Zuständen L2.1, L2.2 und L3 sind, und den Eingangsleistungsverbrauch;

Erstellen einer Echtzeitstatistik über Dauern, in denen die Leitungen in $L0_{full}$, $L0_{mid}$ und $L0_{low}$ sind, und den Eingangsleistungsverbrauch, wobei $L0_{full}$, $L0_{mid}$ und $L0_{low}$ drei verschiedene Teilzustände des Zustands L0 sind, $L0_{full}$ sich darauf bezieht, dass Datensymbole einen vollen TDD-Frame belegen, $L0_{mid}$ sich darauf bezieht, dass Datensymbole einen ersten voreingestellten Anteil der Gesamtanzahl von Symbolen in einem TDD-Frame belegen, und $L0_{low}$ sich darauf bezieht, dass Datensymbole einen zweiten voreingestellten Anteil der Gesamtanzahl der Symbole in einem TDD-Frame belegen; und

Einstellen der Dauer, in der die Leitungen im Zustand L2.1, L2.2, L3, $L0_{full}$, $L0_{mid}$ und $L0_{low}$ sind, um sicherzustellen, dass der Leistungsverbrauch $W_{consumption}$, den die DPU benötigt, mit dem Eingangsleistungsverbrauch $W_{supply}$ übereinstimmt, wenn die DPU gespeist wird.

9. Verfahren nach Anspruch 8, wobei der $W_{consumption}$ umfasst:

$$W_{consumption} \approx P_{L3} \times t_{L3} + P_{L2.2} \times t_{L2.2} + P_{L2.1} \times t_{L2.1} + P_{L0_{full}} \times t_{L0_{full}} + P_{L0_{mid}} \times$$

$$t_{L0_{mid}} + P_{L0_{low}} \times t_{L0_{low}};$$

wobei $t_{L3}$, $t_{L2.2}$, $t_{L2.1}$, $t_{L0_{full}}$, $t_{L0_{mid}}$ und $t_{L0_{low}}$ die Dauern sind, in denen Leitungen in den Zuständen L3, L2.2, L2.1, $L0_{full}$, $L0_{mid}$ bzw. $L0_{low}$ sind; $P_{L0_{mid}}$ sich auf eine Eingangsleistung bezieht, die die DPU benötigt, wenn eine Downlink-Leitung der DPU arbeitet und die Leitung im Zustand $L0_{mid}$ ist; $P_{L0_{low}}$ sich auf eine Eingangsleistung bezieht, die die DPU benötigt, wenn eine Downlink-Leitung der DPU arbeitet und die Leitung im Zustand $L0_{low}$ ist; $P_{L0_{full}}$ sich auf eine Eingangsleistung bezieht, die die DPU benötigt, wenn eine Downlink-Leitung der DPU arbeitet und die Leitung im Zustand $L0_{full}$ ist.

10. Leistungsrückspeisungsverarbeitungsvorrichtung, umfassend:

ein Detektionsmodul (32), das konfiguriert ist, für eine Verteilungspunkteinheit, DPU, aktuelle Arbeitszustände von Leitungen zu überwachen, die mit der DPU verbunden sind; und
ein Leistungsspeisungsmodul (34), das konfiguriert ist, gemäß den aktuellen Arbeitszuständen der Leitungen eine Leistungsversorgungsstrategie entsprechender Leitungen zum Durchführen von Leistungsspeisung zu bestimmen;
**dadurch gekennzeichnet, dass**
die Vorrichtung weiter umfasst:
ein Steuermodul, das konfiguriert ist, die aktuellen Arbeitszustände der Leitungen gemäß Zuständen eines Leistungsquellengeräts, PSE, zu steuern, das mit den Leitungen verbunden ist, wobei sich der aktuelle Arbeitszustand einer Leitung auf einen von Arbeitszuständen bezieht, in welchen sich die Leitung befinden kann, und die Arbeitszustände der Leitung mindestens einen von einem Leerlaufzustand L3, einem normalen Betriebszustand L0, einem Niederleistungsverbrauchszustand L2.1 und einem Bereitschaftszustand L2.2 umfassen.

11. Vorrichtung nach Anspruch 10, wobei das Leistungsspeisungsmodul (34) umfasst:

eine Leistungsverbrauchseinheit, die konfiguriert ist, gemäß den Arbeitszuständen der Leitungen einen Leistungsverbrauchszustand der DPU zu bestimmen, und die Leistungsversorgungsstrategie entsprechender Leitungen zum Durchführen von Leistungsspeisung gemäß dem Leistungsverbrauchszustand der DPU zu bestimmen;
wobei der Leistungsverbrauchszustand der DPU mindestens einen umfasst von:

einem Leerlauf- oder Bereitschaftszustand STATE1, in dem alle Downlink-Leitungen der DPU im Leerlaufzustand L3 oder im Bereitschaftszustand L2.2 sind;
einem Niederverbrauchszustand STATE2, in dem keine Leitung unter allen Downlink-Leitungen der DPU im normalen Betriebszustand L0 ist und mindestens eine Leitung unter allen Downlink-Leitungen der DPU im Niederleistungsverbrauchszustand L2.1 ist; und
einem normalen Betriebszustand STATE3, in dem mindestens eine Leitung unter allen Downlink-Leitungen der DPU im normalen Betriebszustand L0 ist.

12. Vorrichtung nach Anspruch 10, wobei:

falls eine Nennausgangsleistung jedes der PSE $P_{rated}$ ist:

wenn $P_{rated} \geq P_{L0(full)}$, eine Leitung, die mit dem PSE verbunden ist, in einem der Arbeitszustände ist, und der Zustand des PSE als $Q_{L0(full)}$ markiert ist;
wenn $P_{L2.1} \leq P_{rated} < P_{L0(full)}$, eine Leitung, die mit dem PSE verbunden ist, in einem Zustand L2.1, L2.2 oder L3 ist und der Zustand des PSE als $Q_{L2.1}$ markiert ist; und
wenn $\max(P_{L2.2}; P_{L3}) \leq P_{rated} < P_{L2.1}$, eine Leitung, die mit dem PSE verbunden ist, in einem Zustand $L_{2.2}$ oder $L_3$ ist und der Zustand des PSE als $Q_{low}$ markiert ist;

wobei:

$P_{L0(full)}$ sich auf eine Eingangsleistung bezieht, die die DPU benötigt, wenn nur die Downlink-Leitung, die im Zustand L0 ist, der DPU arbeitet und die DPU bei voller Leistung läuft;

$P_{L2.1}$ sich auf eine Eingangsleistung bezieht, die die DPU benötigt, wenn nur die Downlink-Leitung, die im Zustand L2.1 ist, der DPU arbeitet;

$P_{L2.2}$ sich auf eine Eingangsleistung bezieht, die die DPU benötigt, wenn nur die Downlink-Leitung, die im Zustand L2.2 ist, der DPU arbeitet;

$PL_3$ sich auf eine Eingangsleistung bezieht, die die DPU benötigt, wenn nur die Downlink-Leitung, die im Zustand L3 ist, der DPU arbeitet;

wobei das Steuermodul konfiguriert ist, wenn das PSE einer Leitung im Zustand $Q_{low}$ ist, zu bestimmen, dass die Leitung im Zustand L2.2 oder L3 ist;

das Steuermodul konfiguriert ist, wenn das PSE einer Leitung im Zustand $Q_{L2.1}$ ist, zu bestimmen, dass die Leitung im Zustand L2.1, L2.2 oder L3 ist;

das Steuermodul konfiguriert ist, wenn das PSE einer Leitung im Zustand $Q_{L0(full)}$ ist, zu bestimmen, dass die Leitung in einem der Arbeitszustände L2.1, L2.2, L0 und L3 ist.

**13.** Vorrichtung nach Anspruch 11, wobei das Leistungsspeisungsmodul (34) umfasst:

eine erste Leistungsspeisungseinheit, die konfiguriert ist, wenn der Leistungsverbrauchszustand der DPU der Leerlauf- oder Bereitschaftszustand STATE1 ist, Informationen von Leitungen unter den Leitungen zu erhalten, deren PSE Zustände $Q_{L0(full)}$, $Q_{L2.1}$ und $Q_{low}$ hat, und alle Leitungen im Zustand L2.2 oder L3 auszuwählen, um eine ausgewogene Leistungsspeisung durchzuführen; und

wobei die erste Leistungsspeisungseinheit konfiguriert ist, eine Echtzeitstatistik über Dauern, in der die Leitungen in den Zuständen L2.2 und L3 sind, und einen Eingangsleistungsverbrauch durchzuführen und die Dauern der Leitungen einzustellen, um sicherzustellen, dass ein Leistungsverbrauch $W_{consumption}$, den die DPU benötigt, mit dem Eingangsleistungsverbrauch $W_{supply}$ übereinstimmt, wenn die DPU gespeist wird; der $W_{consumption}$ umfasst:

$$W_{consumption} \approx P_{L3} \times t_{L3} + P_{L2.2} \times t_{L2.2};$$

wo $t_{L3}$ die Dauer ist, in der eine Leitung im Zustand L3 ist, und $t_{L2.2}$ die Dauer ist, in der eine Leitung im Zustand L2.2 ist.

**14.** Vorrichtung nach Anspruch 11, wobei das Leistungsspeisungsmodul (34) umfasst:

eine zweite Leistungsspeisungseinheit, die konfiguriert ist, falls der Leistungsverbrauchszustand der DPU der Niederleistungsverbrauchszustand STATE2 ist, Informationen von Leitungen unter den Leitungen zu erhalten, deren PSE Zustände $Q_{L0(full)}$, $Q_{L2.1}$ und $Q_{low}$ hat, und Leitungen im Zustand $Q_{L0(full)}$ oder $Q_{L2.1}$ auszuwählen, um eine verfügbare Leistungsspeisungsgruppe $M_{supply}$ zu bilden;

wobei die zweite Leistungsspeisungseinheit konfiguriert ist, alle Leitungen im Zustand L2.1 auszuwählen, um eine ausgewogene Leistungsspeisung durchzuführen, und wenn ein Eingangsleistungsverbrauch $W_{supply}$, wenn die DPU gespeist wird, einen Leistungsverbrauch $W_{consumption}$ nicht erfüllen kann, den die DPU benötigt, eine Leitung aus der Gruppe $M_{supply}$ hinzuzufügen; und

wobei die zweite Leistungsspeisungseinheit konfiguriert ist, eine Echtzeitstatistik über Dauern, in denen die Leitungen in den Zuständen L2.1, L2.2 und L3 sind, und den Eingangsleistungsverbrauch durchzuführen und die Dauern der Leitungen einzustellen, um sicherzustellen, dass der Leistungsverbrauch $W_{consumption}$, den die DPU benötigt, mit dem Eingangsleistungsverbrauch $W_{supply}$ übereinstimmt, wenn die DPU gespeist wird; der $W_{consumption}$ umfasst:

$$W_{consumption} \approx P_{L3} \times t_{L3} + P_{L2.2} \times t_{L2.2} + P_{L2.1} \times t_{L2.1};$$

wobei $t_{L3}$, $t_{L2.2}$ und $t_{L2.1}$ die Dauer sind, in der Leitungen in den Zuständen L3, L2.2 bzw. L2.1 sind.

**15.** Vorrichtung nach Anspruch 11, wobei das Leistungsspeisungsmodul (34) umfasst:

eine dritte Leistungsspeisungseinheit, die konfiguriert ist, wenn der Leistungsverbrauchszustand der DPU der normale Betriebszustand STATE3 ist, Informationen von Leitungen unter den Leitungen, deren PSE Zustände $Q_{L0(full)}$, $Q_{L2.1}$ und $Q_{low}$ hat, zu erhalten und Leitungen im Zustand $Q_{L0(full)}$ auszuwählen, um eine verfügbare Leistungsspeisungsgruppe $M_{supply}$ zu bilden;

wobei die dritte Leistungsspeisungseinheit konfiguriert ist, alle Leitungen im Zustand L0 auszuwählen, um eine ausgewogene Leistungsspeisung durchzuführen, und wenn ein Eingangsleistungsverbrauch $W_{supply}$, wenn die DPU gespeist wird, einen Leistungsverbrauch $W_{consumption}$ nicht erfüllen kann, den die DPU benötigt, eine Leitung aus der Gruppe $M_{supply}$ hinzuzufügen;

wobei die dritte Leistungsspeisungseinheit konfiguriert ist, eine Echtzeitstatistik über Dauern, in denen die Leitungen in den Zuständen L2.1, L2.2 und L3 sind, und den Eingangsleistungsverbrauch zu erstellen;

wobei die dritte Leistungsspeisungseinheit konfiguriert ist, eine Echtzeitstatistik über eine Dauer, in der die Leitungen in $L0_{full}$, $L0_{mid}$ und $L0_{low}$ sind, und den Eingangsleistungsverbrauch zu erstellen, wobei $L0_{full}$, $L0_{mid}$ und $L0_{low}$ drei verschiedene Teilzustände des Zustands L0, sind, $L0_{full}$ sich darauf bezieht, dass Datensymbole einen vollen TDD-Frame belegen, $L0_{mid}$ sich darauf bezieht, dass Datensymbole einen ersten voreingestellten Anteil der Gesamtanzahl von Symbolen in einem TDD-Frame belegen, und $L0_{low}$ sich darauf bezieht, dass Datensymbole einen zweiten voreingestellten Anteil der Gesamtanzahl der Symbole in einem TDD-Frame belegen; und

wobei die dritte Leistungsspeisungseinheit konfiguriert ist, die Dauer einzustellen, in der die Leitungen im Zustand L2.1, L2.2, L3, $L0_{full}$, $L0_{mid}$ und $L0_{low}$ sind, um sicherzustellen, dass der Leistungsverbrauch $W_{consumption}$, den die DPU benötigt, mit dem Eingangsleistungsverbrauch $W_{supply}$ übereinstimmt, wenn die DPU gespeist wird;

wobei der $W_{consumption}$ umfasst:

$$W_{consumption} \approx P_{L3} \times t_{L3} + P_{L2.2} \times t_{L2.2} + P_{L2.1} \times t_{L2.1} + P_{L0_{full}} \times t_{L0_{full}} + P_{L0_{mid}} \times t_{L0_{mid}} + P_{L0_{low}} \times t_{L0_{low}};$$

wobei $t_{L3}$, $t_{L2.2}$, $t_{L2.1}$, $t_{L0_{full}}$, $t_{L0_{mid}}$ und $t_{L0_{low}}$ die Dauer sind, in der Leitungen in den Zuständen L3, L2.2, L2.1, $L0_{full}$, $L0_{mid}$ bzw. $L0_{low}$ sind; $P_{L0_{mid}}$ sich auf eine Eingangsleistung bezieht, die die DPU benötigt, wenn eine Downlink-Leitung der DPU arbeitet und die Leitung im Zustand $L0_{mid}$ ist; $P_{L0_{low}}$ sich auf eine Eingangsleistung bezieht, die die DPU benötigt, wenn eine Downlink-Leitung der DPU arbeitet und die Leitung im Zustand $L0_{low}$ ist; $P_{L0_{full}}$ sich auf eine Eingangsleistung bezieht, die die DPU benötigt, wenn eine Downlink-Leitung der DPU arbeitet und die Leitung im Zustand $L0_{full}$ ist.

**Revendications**

1. Procédé de traitement d'alimentation en puissance inverse, comprenant :

   la surveillance (S202), par une unité de point de distribution, DPU, d'états actifs actuels de lignes connectées à la DPU ; et
   en fonction des états actifs actuels des lignes, la détermination (S204) d'une stratégie de chargement en puissance de lignes correspondantes pour réaliser une alimentation en puissance ; **caractérisé en ce que** le procédé comprend en outre :
   la commande des états actifs actuels des lignes en fonction des états d'un équipement de source de puissance, PSE, connecté aux lignes, dans lequel l'état actif actuel d'une ligne fait référence à un des états actifs dans lesquels la ligne peut être, et les états actifs de la ligne comprennent au moins l'un parmi un état inactif L3, un état de fonctionnement normal L0, un état de basse consommation de puissance L2.1 et un état de veille L2.2.

2. Procédé selon la revendication 1, dans lequel la détermination (S204) d'une stratégie de chargement en puissance de lignes correspondantes pour réaliser une alimentation en puissance en fonction des états actifs actuels des lignes comprend :

   en fonction des états actifs des lignes, la détermination d'un état de consommation de puissance de la DPU, et la détermination de la stratégie de chargement en puissance de lignes correspondantes pour réaliser une alimentation en puissance en fonction de l'état de consommation de puissance de la DPU ;
   dans lequel l'état de consommation de puissance de la DPU comprend au moins l'un parmi :

   un état inactif ou de veille STATE1 dans lequel toutes les lignes en liaison descendante de la DPU sont dans l'état inactif L3 ou dans l'état de veille L2.2 ;
   un état de basse consommation STATE2 dans lequel il n'y a pas de ligne dans l'état de fonctionnement normal L0 parmi toutes les lignes en liaison descendante de la DPU et il y a au moins une ligne dans l'état de basse consommation de puissance L2.1 parmi toutes les lignes en liaison descendante de la DPU ; et un état de fonctionnement normal STATE3 dans lequel il y a au moins une ligne dans l'état de fonctionnement normal L0 parmi toutes les lignes en liaison descendante de la DPU.

**3.** Procédé selon la revendication 1, dans lequel la commande des états actifs actuels des lignes en fonction des états du PSE connecté aux lignes, comprend :

si une puissance en sortie nominale de chaque PSE est $P_{rated}$ :

lorsque $P_{rated} \geq P_{L0(full)}$, la détermination qu'une ligne connectée au PSE est dans l'un quelconque des états actifs, et le signalement de l'état du PSE en tant que $Q_{L0(full)}$ ;
lorsque $P_{L2.1} \leq P_{rated} < P_{L0(full)}$, la détermination qu'une ligne connectée au PSE est dans un état de L2.1, L2.2 ou L3, et le signalement de l'état du PSE en tant que $Q_{L2.1}$ ; et
lorsque $\max(P_{L2.2}; P_{L3}) \leq P_{rated} < P_{L2.1}$, la détermination qu'une ligne connectée au PSE est dans un état de $L_{2.2}$ ou $L_3$, et le signalement de l'état du PSE en tant que $Q_{low}$ ;

dans lequel :

$P_{L0(full)}$ fait référence à une puissance en entrée requise par le DPU lorsque seule la ligne en liaison descendante, qui est dans l'état de L0, du DPU est active et la DPU fonctionne à pleine puissance ;
$P_{L2.1}$ fait référence à une puissance en entrée requise par le DPU lorsque seule la ligne en liaison descendante, qui est dans l'état de L2.1, de la DPU est active ;
$P_{L2.2}$ fait référence à une puissance en entrée requise par le DPU lorsque seule la ligne en liaison descendante, qui est dans l'état de L2.2, de la DPU est active ;
$P_{L3}$ fait référence à une puissance en entrée requise par le DPU lorsque seule la ligne en liaison descendante, qui est dans l'état de L3, de la DPU est active ;
lorsque le PSE d'une ligne est dans l'état de $Q_{low}$, la ligne est dans l'état de L2.2 ou L3 ;
lorsque le PSE d'une ligne est dans l'état de $Q_{L2.1}$, la ligne est dans l'état de L2.1, L2.2 ou L3 ;
lorsque le PSE d'une ligne est dans l'état de $Q_{L0(full)}$, la ligne est dans l'un quelconque des états actifs de L2.1, L2.2, L0 et L3.

**4.** Procédé selon la revendication 2, dans lequel la détermination de la stratégie de chargement en puissance de lignes correspondantes pour réaliser une alimentation en puissance en fonction de l'état de consommation de puissance de la DPU comprend :

lorsque l'état de consommation de puissance de la DPU est l'état inactif ou de veille STATE1, l'obtention d'informations de lignes, dont le PSE a des états de $Q_{L0(full)}$, $Q_{L2.1}$ et $Q_{low}$, parmi les lignes, et la sélection de toutes les lignes dans l'état de L2.2 ou L3 pour réaliser une alimentation en puissance équilibrée ; et
la réalisation de statistiques en temps réel sur des durées lorsque les lignes sont dans les états de L2.2 et L3 et une consommation de puissance en entrée, et l'ajustement des durées des lignes pour garantir qu'une consommation de puissance $W_{consumption}$ requise par la DPU est compatible avec la consommation de puissance en entrée $W_{supply}$ lorsque la DPU est alimentée.

**5.** Procédé selon la revendication 4, dans lequel la $W_{consumption}$ comprend :

$$W_{consumption} \approx P_{L3} \times t_{L3} + P_{L2.2} \times t_{L2.2} ;$$

où $t_{L3}$ est la durée lorsqu'une ligne est dans l'état de L3, et $t_{L2.2}$ est la durée lorsqu'une ligne est dans l'état de L2.2.

**6.** Procédé selon la revendication 2, dans lequel la détermination de la stratégie de chargement en puissance de lignes correspondantes pour réaliser une alimentation en puissance en fonction de l'état de consommation de puissance de la DPU comprend :

si l'état de consommation de puissance de la DPU est l'état de basse consommation de puissance STATE2, l'obtention d'informations de lignes, dont le PSE a des états de $Q_{L0(full)}$, $Q_{L2.1}$ et $Q_{low}$, parmi les lignes, et la sélection de lignes dans l'état de $Q_{L0(full)}$ ou $Q_{L2.1}$ pour former un groupe d'alimentation en puissance disponible $M_{supply}$ ;

la sélection de toutes les lignes de L2.1 pour réaliser une alimentation en puissance équilibrée et, lorsqu'une consommation de puissance en entrée $W_{supply}$ lorsque la DPU est alimentée ne peut pas satisfaire une consommation de puissance $W_{consumption}$ requise par la DPU, l'ajout d'une ligne à partir du groupe $M_{supply}$ ; et

la réalisation de statistiques en temps réel sur des durées lorsque les lignes sont dans les états de L2.1, L2.2 et L3 et la consommation de puissance en entrée, et l'ajustement des durées des lignes pour garantir que la consommation de puissance $W_{consumption}$ requise par la DPU est compatible avec la consommation de puissance en entrée $W_{supply}$ lorsque la DPU est alimentée.

**7.** Procédé selon la revendication 6, dans lequel la $W_{consumption}$ comprend :

$$W_{consumption} \approx P_{L3} \times t_{L3} + P_{L2.2} \times t_{L2.2} + P_{L2.1} \times t_{L2.1} ;$$

dans lequel $t_{L3}$, $t_{L2.2}$ et $t_{L2.1}$ sont les durées lorsque des lignes sont dans les états de L3, L2.2 et L2.1, respectivement.

**8.** Procédé selon la revendication 2, dans lequel la détermination de la stratégie de chargement en puissance de lignes correspondantes pour réaliser une alimentation en puissance en fonction de l'état de consommation de puissance de la DPU comprend :

lorsque l'état de consommation de puissance de la DPU est l'état de fonctionnement normal STATE3, l'obtention d'informations de lignes, dont le PSE a des états de $Q_{L0(full)}$, $Q_{L2.1}$ et $Q_{low}$, parmi les lignes, et la sélection de lignes dans l'état de $Q_{L0(full)}$ pour former un groupe d'alimentation en puissance disponible $M_{supply}$ ;

la sélection de toutes les lignes dans l'état de L0 pour réaliser une alimentation en puissance équilibrée et, lorsqu'une consommation de puissance en entrée $W_{supply}$ lorsque la DPU est alimentée ne peut pas satisfaire une consommation de puissance $W_{consumption}$ requise par la DPU, l'ajout d'une ligne à partir du groupe $M_{supply}$ ; et

la réalisation de statistiques en temps réel sur des durées lorsque les lignes sont dans les états de L2.1, L2.2 et L3 et la consommation de puissance en entrée ;

la réalisation de statistiques en temps réel lorsque les lignes sont dans $L0_{full}$, $L0_{mid}$ et $L0_{low}$ et la consommation de puissance en entrée, dans lequel $L0_{full}$, $L0_{mid}$ et $L0_{low}$ sont trois sous-états différents de l'état L0, $L0_{full}$ fait référence au fait que des symboles de données occupent une trame TDD complète, $L0_{mid}$ fait référence au fait que des symboles de données occupent une première proportion pré-établie du nombre total de symboles dans une trame TDD, et $L0_{low}$ fait référence au fait que des symboles de données occupent une seconde proportion pré-établie du nombre total des symboles dans une trame TDD ; et

l'ajustement des durées lorsque les lignes sont dans l'état de L2.1, L2.2, L3, $L0_{full}$, $L0_{mid}$ et $L0_{low}$ pour garantir que la consommation de puissance $W_{consumption}$ requise par la DPU est compatible avec la consommation de puissance en entrée $W_{supply}$ lorsque la DPU est alimentée.

**9.** Procédé selon la revendication 8, dans lequel la $W_{consumption}$ comprend :

$$W_{consumption} \approx P_{L3} \times t_{L3} + P_{L2.2} \times t_{L2.2} + P_{L2.1} \times t_{L2.1} + P_{L0_{full}} \times t_{L0_{full}} + P_{L0_{mid}} \times t_{L0_{mid}} +$$

$$P_{L0_{low}} \times t_{L0_{low}} ;$$

dans lequel $t_{L3}$, $t_{L2.2}$, $t_{L2.1}$, $t_{L0_{full}}$, $t_{L0_{mid}}$ et $t_{L0_{low}}$ sont les durées lorsque des lignes sont dans les états de L3, L2.2, L2.1, $L0_{full}$, $L0_{mid}$ et $L0_{low}$, respectivement; $P_{L0_{mid}}$ fait référence à une puissance en entrée requise par la DPU lorsqu'il y a une ligne en liaison descendante de la DPU active et que la ligne est dans l'état de $L0_{mid}$ ; $P_{L0_{low}}$ fait référence à une puissance en entrée requise par la DPU lorsqu'il y a une ligne en liaison descendante de la DPU active et que la ligne est dans l'état de $L0_{low}$; $P_{L0_{full}}$ fait référence une puissance en entrée requise par la DPU lorsqu'il y a une ligne en liaison descendante de la DPU active et que la ligne est dans l'état de $L0_{full}$.

**10.** Dispositif de traitement d'alimentation en puissance inverse, comprenant :

un module de détection (32) configuré pour surveiller, pour une unité de point de distribution, DPU, des états actifs actuels de lignes connectées à la DPU ; et

un module d'alimentation en puissance (34) configuré pour, en fonction des états actifs actuels des lignes, déterminer une stratégie de chargement en puissance de lignes correspondantes pour réaliser une alimentation en puissance ;

**caractérisé en ce que** le dispositif comprend en outre :

un module de commande configuré pour commander les états actifs actuels des lignes en fonction des états de l'équipement de source de puissance, PSE, connecté aux lignes, dans lequel l'état actif actuel d'une ligne fait référence à un des états actifs dans lesquels la ligne peut être, et les états actifs de la ligne comprennent au moins l'un parmi un état inactif L3, un état de fonctionnement normal L0, un état de basse consommation de puissance L2.1 et un état de veille L2.2.

**11.** Dispositif selon la revendication 10, dans lequel le module d'alimentation en puissance (34) comprend :

une unité de consommation de puissance configurée pour, en fonction des états actifs des lignes, déterminer un état de consommation de puissance de la DPU, et déterminer la stratégie de chargement en puissance de lignes correspondantes pour réaliser une alimentation en puissance en fonction de l'état de consommation de puissance de la DPU ;

dans lequel l'état de consommation de puissance de la DPU comprend au moins l'un parmi :

un état inactif ou de veille STATE1 dans lequel toutes les lignes en liaison descendante de la DPU sont dans l'état inactif L3 ou dans l'état de veille L2.2 ;

un état de basse consommation STATE2 dans lequel il n'y a pas de ligne dans l'état de fonctionnement normal L0 parmi toutes les lignes en liaison descendante de la DPU et il y a au moins une ligne dans l'état de basse consommation de puissance L2.1 parmi toutes les lignes en liaison descendante de la DPU ; et

un état de fonctionnement normal STATE3 dans lequel il y a au moins une ligne dans l'état de fonctionnement normal L0 parmi toutes les lignes en liaison descendante de la DPU.

**12.** Dispositif selon la revendication 10, dans lequel :

si une puissance en sortie nominale de chacun des PSE est $P_{rated}$ ;

lorsque $P_{rated} \geq P_{L0(full)}$, une ligne connectée au PSE est dans l'un quelconque des états actifs, et l'état du PSE est signalé en tant que $Q_{L0(full)}$ ;

lorsque $P_{L2.1} \leq P_{rated} < P_{L0(full)}$, une ligne connectée au PSE est dans un état de L2.1, L2.2 ou L3, et l'état du PSE est signalé en tant que $Q_{2.1}$ ; et

lorsque $max(P_{L2.2}, P_{L3}) \leq P_{rated} < P_{L2.1}$, une ligne connectée au PSE est dans un état de L2.2 ou L3, et l'état du PSE est signalé en tant que $Q_{low}$ ;

dans lequel :

$P_{L0(full)}$ fait référence à une puissance en entrée requise par la DPU lorsque seule la ligne en liaison descendante, qui est dans l'état de L0, de la DPU est active et que la DPU fonctionne à pleine puissance ;

$P_{L2.1}$ fait référence à une puissance en entrée requise par la DPU lorsque seule la ligne en liaison descendante, qui est dans l'état de L2.1, de la DPU est active ;

$P_{L2.2}$ fait référence à une puissance en entrée requise par la DPU lorsque seule la ligne en liaison descendante, qui est dans l'état de L2.2, de la DPU est active ;

$P_{L3}$ fait référence à une puissance en entrée requise par la DPU lorsque seule la ligne en liaison descendante, qui est dans l'état de L3, de la DPU est active ;

dans lequel le module de commande est configuré pour, lorsque le PSE d'une ligne est dans l'état de $Q_{low}$, déterminer que la ligne est dans l'état de L2.2 ou L3 ;

le module de commande est configuré pour, lorsque le PSE d'une ligne est dans l'état de $Q_{L2.1}$, déterminer que la ligne est dans l'état de L2.1, L2.2 ou L3 ;

le module de commande est configuré pour, lorsque le PSE d'une ligne est dans l'état de $Q_{L0(full)}$, déterminer que la ligne est dans l'un quelconque des états actifs de L2.1, L2.2, L0 et L3.

**13.** Dispositif selon la revendication 11, dans lequel le module d'alimentation en puissance (34) comprend :

une première unité d'alimentation en puissance configurée pour, lorsque l'état de consommation de puissance de la DPU est l'état inactif ou de veille STATE1, obtenir des informations de lignes, dont le PSE a des états de $Q_{L0(full)}$, $Q_{L2.1}$ et $Q_{low}$, parmi les lignes, et sélectionner toutes les lignes dans l'état de L2.2 ou L3 pour réaliser une alimentation en puissance équilibrée ; et

dans lequel la première unité d'alimentation en puissance est configurée pour réaliser des statistiques en temps réel sur des durées lorsque les lignes sont dans les états de L2.2 et L3 et une consommation de puissance en entrée, et ajuster les durées des lignes pour garantir qu'une consommation de puissance $W_{consumption}$ requise par la DPU est compatible avec la consommation de puissance en entrée $W_{supply}$ lorsque la DPU est alimentée ; la $W_{consumption}$ comprend :

$$W_{consumption} \approx P_{L3} \times t_{L3} + P_{L2.2} \times t_{L2.2} ;$$

où $t_{L3}$ est la durée lorsqu'une ligne est dans l'état de L3, et $t_{L2.2}$ est la durée lorsqu'une ligne est dans l'état de L2.2.

**14.** Dispositif selon la revendication 11, dans lequel le module d'alimentation en puissance (34) comprend :

une deuxième unité d'alimentation en puissance configurée pour, si l'état de consommation en puissance de la DPU est l'état de basse consommation de puissance STATE2, obtenir des informations de lignes, dont le PSE a des états de $Q_{L0(full)}$, $Q_{L2.1}$ et $Q_{low}$, parmi les lignes, et sélectionner des lignes dans l'état de $Q_{L0(full)}$ ou $Q_{L2.1}$ pour former un groupe d'alimentation en puissance disponible $M_{supply}$ ;
dans lequel la deuxième unité d'alimentation en puissance est configurée pour sélectionner toutes les lignes dans l'état de L2.1 pour réaliser une alimentation en puissance équilibrée, et lorsqu'une consommation de puissance en entrée $W_{supply}$ lorsque la DPU est alimentée ne peut pas satisfaire une consommation de puissance $W_{consumption}$ requise par la DPU, ajouter une ligne à partir du groupe $M_{supply}$ ; et
dans lequel la deuxième unité d'alimentation en puissance est configurée pour réaliser des statistiques en temps réel sur des durées lorsque les lignes sont dans les états de L2.1, L2.2 et L3 et la consommation de puissance en entrée, et ajuster les durées des lignes pour garantir que la consommation de puissance $W_{consumption}$ requise par la DPU est compatible avec la consommation de puissance en entrée $W_{supply}$ lorsque la DPU est alimentée ;
la $W_{consumption}$ comprend :

$$W_{consumption} \approx P_{L3} \times t_{L3} + P_{L2.2} \times t_{L2.2} + P_{L2.1} \times t_{L2.1} ;$$

dans lequel $t_{L3}$, $t_{L2.2}$ et $t_{L2.1}$ sont les durées lorsque des lignes sont dans les états de L3, L2.2 et L2.1, respectivement.

**15.** Dispositif selon la revendication 11, dans lequel le module d'alimentation en puissance (34) comprend :

une troisième unité d'alimentation en puissance configurée pour, lorsque l'état de consommation de puissance de la DPU est dans l'état de fonctionnement normal STATE3, obtenir des informations de lignes, dont le PSE a des états $Q_{L0(full)}$, $Q_{L2.1}$ et $Q_{low}$, parmi les lignes, et sélectionner des lignes dans l'état de $Q_{L0(full)}$ pour former un groupe d'alimentation en puissance disponible $M_{supply}$ ;
dans lequel la troisième unité d'alimentation en puissance est configurée pour sélectionner toutes les lignes dans l'état de L0 pour réaliser une alimentation en puissance équilibrée, et lorsqu'une consommation de puissance en entrée $W_{supply}$ lorsque la DPU est alimentée ne peut pas satisfaire une consommation de puissance $W_{consumption}$ requise par la DPU, ajouter une ligne à partir du groupe $M_{supply}$ ;
dans lequel la troisième unité d'alimentation en puissance est configurée pour réaliser des statistiques en temps réel sur des durées lorsque les lignes sont dans les états de L2.1, L2.2 et L3 et la consommation de puissance en entrée ;
dans lequel la troisième unité d'alimentation en puissance est configurée pour réaliser des statistiques en temps réel sur des durées lorsque les lignes sont dans $L0_{full}$, $L0_{mid}$ et $L0_{low}$ et la consommation de puissance en entrée, dans lequel dans $L0_{full}$, $L0_{mid}$ et $L0_{low}$ sont trois sous-états différents de l'état L0, $L0_{full}$ fait référence au fait que des symboles de données occupent une trame TDD complète, $L0_{mid}$ fait référence au fait que des symboles de données occupent une première proportion pré-établie du nombre total de symboles dans une trame TDD, et $L0_{low}$ fait référence au fait que des symboles de données occupent une seconde proportion préétablie du nombre total des symboles dans une trame TDD ; et
dans lequel la troisième unité d'alimentation en puissance est configurée pour ajuster les durées lorsque les lignes sont dans l'état de L2.1, L2.2, L3, $L0_{full}$, $L0_{mid}$ et $L0_{low}$ pour garantir que la consommation de puissance $W_{consumption}$ requise par la DPU est compatible avec la consommation de puissance en entrée $W_{supply}$ lorsque la DPU est alimentée ;
la $W_{consumption}$ comprend :

$$W_{consumption} \approx P_{L3} \times t_{L3} + P_{L2.2} \times t_{L2.2} + P_{L2.1} \times t_{L2.1} + P_{L0_{full}} \times t_{L0_{full}} + P_{L0_{mid}} \times t_{L0_{mid}} +$$

$$P_{L0_{low}} \times t_{L0_{low}} \; ;$$

dans lequel $t_{L3}$, $t_{L2.2}$, $t_{L2.1}$, $t_{L0_{full}}$, $t_{L0_{mid}}$ et $t_{L0_{low}}$ sont les durées lorsque des lignes sont dans les états de L3, L2.2, L2.1, $L0_{full}$, $L0_{mid}$ et $L0_{low}$, respectivement; $P_{L0_{mid}}$ fait référence à une puissance en entrée requise par la DPU lorsqu'il y a une ligne en liaison descendante de la DPU active et que la ligne est dans l'état de $L0_{mid}$ ; $P_{L0_{low}}$ fait référence à une puissance en entrée requise par la DPU lorsqu'il y a une ligne en liaison descendante de la DPU active et que la ligne est dans l'état de $L0_{low}$; $P_{L0_{full}}$ fait référence à une puissance en entrée requise par la DPU lorsqu'il y a une ligne en liaison descendante de la DPU active et que la ligne est dans l'état de $L0_{full}$.

Fig. 1

Fig. 2

```
┌─────────────────────────────┐
│                             │
│     Detection module 32     │
│                             │
└─────────────────────────────┘
               │
               │
┌─────────────────────────────┐
│                             │
│    Power feeding module 34  │
│                             │
└─────────────────────────────┘
```

Fig. 3

```
┌─────────────────────────────┐
│   Randomly select lines having │
│   powering capabilities to perform │
│  initial power feeding to the DPU to │
│   ensure the normal operation of the │
│              DPU            │
└─────────────────────────────┘
               │
               ▼
┌─────────────────────────────┐
│   Monitor the states of the PSEs of │
│   the downlink lines of the DPU  to │
│  determine the powering capabilities │
│   of the lines and the working states │
│     which the lines may be in │
└─────────────────────────────┘
               │
               ▼
┌─────────────────────────────────────┐
│ Monitor the working states of the lines , and control │
│  the states of the lines  according to the states of the │
│              PSEs of the lines │
└─────────────────────────────────────┘
```

```
        ◇ Is DPU in STATE1? ◇ ──YES──▶ ┌ Employ powering ┐ ──▶ ◇ Are there changes ◇ ──YES──▶
                │                         │   strategy S1   │        in DPU states?
                │NO
        ◇ Is DPU in STATE2? ◇ ──YES──▶ ┌ Employ powering ┐ ──▶ ◇ Are there changes ◇ ──YES──▶
                │                         │   strategy S2   │        in DPU states?
                │NO
        ◇ Is DPU in STATE3? ◇ ──YES──▶ ┌ Employ powering ┐ ──▶ ◇ Are  there changes ◇ ──YES──▶
                                          │   strategy S3   │        in DPU states?
```

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2835934 A1

- WO 2014106382 A1